# EUROPEAN PATENT APPLICATION

(11) **EP 4 843 532 A2**
(43) Date of publication of application: **25.11.2026**
(21) Application number: 26170991.9
(22) Date of filing: 07.04.2026
(51) Int. Cl.: A61C 7/08, B29C 51/10

(54) **QUALITY INSPECTION SYSTEM USING THREE-DIMENSIONAL IMAGING SCAN OF DENTAL MOLD**

(30) Priority: 04.04.2025 US 202563783300 P
(71) Applicant: Ormco Corporation, Brea, CA 92821 (US)
(72) Inventor: Nazeck, Benjamin, San Dimas, 91773 (US); Rolinsky, Roman, 1980 Zemst (BE)
(74) Representative: Cleveland Scott York

(57) **Abstract**

Systems, methods, and computer program products for manufacturing orthodontic aligners. A mold is fabricated based on a dentition model representing the dentition of a patient at a stage of orthodontic treatment. The mold is scanned to generate a pre-use mold model representing an outer surface of the mold. The pre-use mold model is compared to one or both of a dentition model and an aligner model to identify any differences. If a difference is identified between the pre-use mold model and the detention model exceeding a threshold, the mold is failed. If no differences are found exceeding the threshold, the mold is passed. If used, the aligner model is generated by scanning a workpiece fabricated using the mold. If a difference is identified between the pre-use mold model and the aligner model exceeding a threshold, the workpiece is failed. If no differences are found exceeding the threshold, the workpiece is passed.

## Description

### FIELD OF THE INVENTION

This application claims priority to U.S. Provisional application No. 63/783,300 filed on April 4, 2025, which is incorporated by reference herein in its entirety.

### FIELD OF THE INVENTION

The present invention relates generally to the field of orthodontic treatment and, more particularly, to systems and methods for detecting defects during the manufacture of orthodontic appliances.

### BACKGROUND

Orthodontics is the practice of manipulating teeth to correct malocclusions between the teeth of the upper and lower dental arches. Typically, treatment of malocclusions includes the use of an orthodontic appliance that applies corrective forces to the teeth. Over time, these corrective forces coerce the teeth to move into their orthodontically correct positions.

One way of applying corrective forces is by utilizing orthodontic appliances referred to as "orthodontic aligners" or simply "aligners." Aligners are generally supplied as a series of removable appliances that incrementally reposition the patient's teeth from their initial orientation to their orthodontically correct orientation. Patients being treated with aligners can insert and remove the aligners at will, and therefore do not need to visit the orthodontist for adjustments. Rather, when the currently worn aligner has moved the teeth sufficiently close to a final orientation for that aligner, the patient merely begins using the next aligner in the series according to a treatment plan.

To manufacture the aligners, the orthodontist first obtains a computer model of the patient's dentition. This model may be generated, for example, by taking an impression of the dentition and scanning the impression into a computer. Alternatively, a clinician may directly scan the patient's teeth with an intraoral scanner. The scanned data may then be used to generate the computer model. Once the computer model has been obtained, the orthodontist may determine a target orientation of the teeth that provides a corrected dentition. Multiple computer models may then be generated, with each model corresponding to an incremental orientation of the dentition from an initial orientation (i.e., the first orientation to which the dentition is moved from its starting orientation) to a target orientation. The incremental orientations from initial to target may move the patient's teeth according to a proposed treatment plan. Treatment plans typically include numerous stages of movement from the initial orientation to the target orientation. Depending on the degree of tooth movement, treatment plans may include a number of aligners that are worn in a predetermined sequence from the initial orientation to the final orientation.

Manufacturing aligners typically involves generating a mold of the teeth (and any attachments thereto) from the computer model of the dentition at each stage of treatment. A sheet of thermoformable material is then thermoformed over each mold to produce a workpiece. The portion of the workpiece that is to become the aligner has an inner surface corresponding to the orientations of the dentition defined by the computer model for that stage of treatment. After each workpiece is formed, excess material is trimmed away from the molded area to produce a wearable aligner.

Because each aligner is unique, aligner manufacture presents certain challenges, particularly with respect to automation. Molds may be fabricated using some type of rapid prototyping process, such as additive manufacturing (e.g., three-dimensional (3-D) printing) or subtractive manufacturing (e.g., computer controlled milling). Evaluating aligners in accordance with an acceptable quality level index (AQI) is one area in which automation has proved difficult. Typically, each aligner is visually inspected by quality control personnel prior to shipment. However, visual inspection is often inconsistent due to its inherently subjective nature, and tends to produce high rates of both false positives (in which aligners without major defects fail inspection) and false negatives (in which aligners with major or critical defects pass inspection). In the case of a false positive, costs are increased due to the unnecessary fabrication of a replacement aligner and reviews of suspect manufacturing processes. False negatives may result in dissatisfied patients, returned aligners, and delayed treatment.

Previous attempts to automate AQI processes have involved comparing images of finished aligners with the computer model of the patient's dentition. For example, by scanning the aligner and comparing the scan file with the computer model. Other attempts at automating AQI have involved generating a computer model of the aligner based on a simulation of one or more fabrication steps in the manufacturing process, and comparing the simulated model to a modified version of the original dentition model. However, because there are multiple fabrication steps between generation of the dentition model and production of the aligner, these techniques have so far proven unreliable in positively identifying where a detected defect occurred or avoiding continued processing of aligners to completion after the defect has occurred.

Thus, there is a general need for improved systems, methods, and computer program products for manufacturing aligners, and in particular, there is a need to improve quality control processes for detecting and reducing manufacturing defects that positively identifies where defects have occurred and avoids overprocessing of defective parts.

### SUMMARY

In one aspect of the disclosure, a method is provided. The method includes receiving a dentition model representing a dentition of a patient at a stage of orthodontic treatment, fabricating a mold based on the dentition model using a mold fabrication process, and scanning the mold to generate a pre-use mold model representing an outer surface of the mold. The method further includes comparing the pre-use mold model and the dentition model and identifying one or more differences between the pre-use mold model and the dentition model based on the comparison. The method fails the mold if at least one of the one or more differences exceeds a first threshold and passes the mold if none of the one or more differences exceeds the first threshold.

In an embodiment of the method, the mold may be a first mold, and the method may further include adjusting a fabrication process for a second mold made after the first mold based on the one or more differences between the pre-use mold model and the dentition model. In an embodiment of the method in which the first mold failed, the second mold may be fabricated based on the dentition model to replace the first mold. In an embodiment of the method in which the first mold passed, the dentition model may be one dentition model of the patient at one stage of orthodontic treatment, and the second mold may be fabricated based on another dentition model of the patient at another stage of orthodontic treatment.

In another embodiment of the method, the method may further include, in response to passing the mold, thermoforming a sheet of thermoformable material over the mold to produce a workpiece having an inner surface formed at least in part by contact with the mold. The method may then scan at least a portion of the inner surface to generate an aligner model representing the portion of the inner surface of the workpiece, compare the pre-use mold model and the aligner model, and identify one or more differences between the pre-use mold model and the aligner model based on the comparison between the pre-use mold model and the aligner model. The method may fail the workpiece if at least one of the one or more differences exceeds a second threshold, and pass the workpiece if none of the one or more differences exceeds the second threshold.

In another embodiment of the method, the dentition model may include a trimline, and the method may further include using the trimline to define a tool path and guiding a cutting tool along the tool path to remove a region of the workpiece between an aligner and a waste portion of the workpiece such that the aligner is separated from the waste portion of the workpiece. In this embodiment, scanning at least a portion of the inner surface may include scanning the aligner after the aligner has been separated from the waste portion of the workpiece.

In another embodiment of the method, the dentition model may include the trimline, and the method may further include, in response to passing the mold, thermoforming the sheet of thermoformable material over the mold to produce the workpiece having the inner surface formed at least in part by contact with the mold using the thermoforming process, using the trimline to define the tool path, guiding the cutting tool along the tool path to remove the region of the workpiece between the aligner and the waste portion of the workpiece such that the aligner is separated from the waste portion of the workpiece, the cutting tool cutting a channel in the mold as the cutting tool moves along the tool path. The method may further include scanning the mold including the channel to generate a post-use mold model including a representation of the channel, comparing the post-use mold model and the dentition model, identifying one or more differences between a position of the channel and the position of the trimline based on the comparison between the post-use mold model and the dentition model, and modifying one or more parameters of at least one of the mold fabrication process or the thermoforming process based on the one or more differences between the position of the channel and the position of the trimline.

In another embodiment of the method, the dentition model may include the trimline, and the method may further include, response to passing the mold, thermoforming the sheet of thermoformable material over the mold to produce the workpiece having the inner surface formed at least in part by contact with the mold, using the trimline to define the tool path, adjusting the tool path based on the one or more differences between the pre-use mold model and the dentition model, and guiding the cutting tool along the adjusted tool path to remove the region of the workpiece between the aligner and waste portion of the workpiece such that the aligner is separated from the waste portion of the workpiece.

In another embodiment of the method, the pre-use mold model may include a plurality of first points, and the dentition model may include a plurality of second points. In this embodiment, identifying the one or more differences between the pre-use mold model and the dentition model may include registering the pre-use mold model and the dentition model, creating a plurality of matched pairs each comprising a first point from the pre-use mold model and a second point from the dentition model closest to the first point, and determining a distance between the first point and the second point of each matched pair. The method may further include classifying areas of the pre-use mold model where the distances are less than a threshold as within a specification, and classifying areas of the pre-use mold model where the distances are greater than the threshold as not within the specification.

In another embodiment of the method, the method may further include adding each first point of each matched pair for which the distance is greater than the threshold to a list of questionable points, and determining if any sets of points on the list of questionable points define a connected region. In response to determining no sets of points on the list of questionable points define a connected region, the method may pass the mold. In response to determining at least one set of points on the list of questionable points defines a connected region, the method may, for each connected region, define a geometric shape of the connected region, define a geometric volume of the connected region based on the geometric shape, and define a Voronoi volume for the connected region based on the points in the connected region. In response to the Voronoi volume being greater than the geometric volume for any connected region, the method may fail the mold, and in response to the Voronoi volume not being greater than the geometric volume for any connected region, the method may pass the mold.

In another aspect of the disclosure, a system is provided. The system includes one or more processors, and a memory coupled to the one or more processors. The memory includes program code that, when executed by the one or more processors, causes the system to receive the dentition model representing the dentition of the patient at the stage of orthodontic treatment, scan the mold fabricated based on the dentition model to generate the pre-use mold model representing the outer surface of the mold, compare the pre-use mold model and the dentition model, identify one or more differences between the pre-use mold model and the dentition model based on the comparison, fail the mold if at least one of the one or more differences exceeds the first threshold, and pass the mold if none of the one or more differences exceeds the first threshold.

In an embodiment of the system, the mold may be the first mold, and the program code further may further cause the system to adjust the fabrication process for the second mold made after the first mold based on the one or more differences between the pre-use mold model and the dentition model. In an embodiment of the system in which the first mold failed, the second mold may be fabricated based on the dentition model to replace the first mold. In an embodiment of the system in which the first mold passed, the dentition model may be the one dentition model of the patient at one stage of orthodontic treatment, and the second mold may be fabricated based on the other dentition model of the patient at the other stage of orthodontic treatment.

In another embodiment of the system, the sheet of thermoformable material may be thermoformed over the mold to produce the workpiece having the inner surface formed at least in part by contact with the mold in response to passing the mold, and the program code may further cause the system to scan at least the portion of the inner surface to generate the aligner model representing the portion of the inner surface of the workpiece, compare the pre-use mold model and the aligner model, identify the one or more differences between the pre-use mold model and the aligner model based on the comparison between the pre-use mold model and the aligner model, fail the workpiece if at least one of the one or more differences exceeds the second threshold, and pass the workpiece if none of the one or more differences exceeds the second threshold.

In another embodiment of the system, the dentition model may include the trimline, and the program code may further cause the system to use the trimline to define the tool path configured to guide the cutting tool to remove the region of the workpiece between the aligner and the waste portion of the workpiece such that the aligner is separated from the waste portion of the workpiece. In this embodiment, scanning the at least the portion of the inner surface may include scanning the aligner after the aligner has been separated from the waste portion of the workpiece.

In another embodiment of the system, the dentition model may include the trimline, and the program code may further cause the system to use the trimline to define the tool path configured to guide the cutting tool to remove the region of the workpiece between the aligner and the waste portion of the workpiece such that the aligner is separated from the waste portion of the workpiece and the cutting tool cuts the channel in the mold as the cutting tool moves along the tool path. In this embodiment, the program code may further cause the system to scan the mold including the channel to generate the post-use mold model including a representation of the channel, compare the post-use mold model and the dentition model, identify one or more differences between the position of the channel and the position of the trimline based on the comparison between the post-use mold model and the dentition model, and modify one or more parameters of at least one of the mold fabrication process or the thermoforming process based on the one or more differences between the position of the channel and the position of the trimline.

In another embodiment of the system, the dentition model may include the trimline, and the program code may further cause the system to use the trimline to define the tool path, and adjust the tool path based on the one or more differences between the pre-use mold model and the dentition model. In this embodiment, the cutting tool may be guided along the adjusted tool path to remove the region of the workpiece between the aligner and the waste portion of the workpiece such that the aligner is separated from the waste portion of the workpiece.

In another embodiment of the system, the pre-use mold model may include the plurality of first points, the dentition model may include the plurality of second points, and the program code may further cause the system to identify the one or more differences between the pre-use mold model and the dentition model by registering the pre-use mold model and the dentition model, creating the plurality of matched pairs each comprising the first point from the pre-use mold model and the second point from the dentition model closest to the first point from the pre-use mold model, determining the distance between the first point and the second point of each matched pair, classifying areas of the pre-use mold model where the distances are less than the threshold as within the specification, and classifying areas of the pre-use mold model where the distances are greater than the threshold as not within the specification.

In another embodiment of the system, the program code may cause the system to classify areas of the pre-use mold model by adding each first point of each matched pair for which the distance is greater than the threshold to the list of questionable points, determining if any sets of points on the list of questionable points define a connected region, and in response to determining no sets of points on the list of questionable points define a connected region, passing the mold. In response to determining at least one set of points on the list of questionable points defines a connected region, the program code may further cause the system to, for each connected region, define the geometric shape of the connected region, define the geometric volume of the connected region based on the geometric shape, and define the Voronoi volume for the connected region based on the points in the connected region. In response to the Voronoi volume being greater than the geometric volume for any connected region, the program code may cause the system to fail the mold. In response to the Voronoi volume not being greater than the geometric volume for any connected region, the program code may cause the system to pass the mold.

In another aspect of the disclosure, a computer program product is provided. The computer program product includes a non-transitory computer-readable storage medium, and program code stored on the non-transitory computer-readable storage medium. The program code is configured so that, when executed by one or more processors, the program code causes the one or more processors to receive the dentition model representing the dentition of the patient at the stage of orthodontic treatment, scan the mold fabricated based on the dentition model to generate the pre-use mold model representing an outer surface of the mold, compare the pre-use mold model and the dentition model, identify one or more differences between the pre-use mold model and the dentition model based on the comparison, fail the mold if at least one of the one or more differences exceeds the first threshold, and pass the mold if none of the one or more differences exceeds the first threshold.

In another aspect of the disclosure, another method is provided. The method includes fabricating a mold based on a dentition model representing a dentition of a patient at a stage of orthodontic treatment using a mold fabrication process, scanning the mold to generate a pre-use mold model representing an outer surface of the mold, thermoforming a sheet of thermoformable material over the mold using a thermoforming process to produce a workpiece having an inner surface formed at least in part by contact with the mold, scanning at least a portion of the inner surface to generate an aligner model representing the portion of the inner surface of the workpiece, comparing the pre-use mold model and the aligner model, identifying one or more differences between the pre-use mold model and the aligner model based on the comparison, failing the workpiece if at least one of the one or more differences exceeds a threshold, and passing the workpiece if none of the one or more differences exceeds the threshold.

In an embodiment of the method, the dentition model may include a trimline, and the method may further include modifying the trimline based on the one or more differences between the pre-use mold model and the aligner model to generate a modified trimline, using the modified trimline to define a tool path, and guiding a cutting tool along the tool path to remove a region of the workpiece between an aligner and a waste portion of the workpiece.

In another embodiment of the method, the workpiece may be a first workpiece, and the method may further include adjusting the thermoforming process for a second workpiece made after the first workpiece based on the one or more differences between the pre-use mold model and the aligner model.

In another embodiment of the method, the first workpiece may have failed, and the second workpiece may be fabricated to replace the first workpiece.

In another embodiment of the method, the dentition model may be one dentition model of the patient at one stage of orthodontic treatment, the first workpiece may have passed, and the second workpiece may be fabricated using another mold fabricated based on another dentition model of the patient at another stage of orthodontic treatment.

In another embodiment of the method, the workpiece may be scanned while on the mold to generate the aligner model, and the method may further include overlaying the pre-use mold model onto the aligner model to identify a demarcation between the inner surface of the workpiece and the outer surface of the mold.

In another embodiment of the method, the aligner model may be a first aligner model, and the method may further include scanning at least a portion of an outer surface of the workpiece to generate a second aligner model representing the portion of the outer surface of the workpiece, comparing the first aligner model and the second aligner model to determine a thickness of the workpiece, determining if the thickness of the workpiece meets an acceptance criteria, failing the workpiece if the thickness of the workpiece does not meet the acceptance criteria, and passing the workpiece if the thickness of the workpiece meets the acceptance criteria.

In another aspect of the disclosure, another system is provided. The system includes one or more processors, and a memory coupled to the one or more processors. The memory includes program code that, when executed by the one or more processors, causes the system to scan the mold fabricated based on the dentition model representing the dentition of the patient at a stage of orthodontic treatment to generate the pre-use mold model representing the outer surface of the mold, scan at least a portion of an inner surface of the workpiece fabricated from the mold using the thermoforming process to generate the aligner model representing the portion of the inner surface of the workpiece, compare the pre-use mold model and the aligner model, identify one or more differences between the pre-use mold model and the aligner model based on the comparison, fail the workpiece if at least one of the one or more differences exceeds the threshold, and pass the workpiece if none of the one or more differences exceeds the threshold.

In an embodiment of the system, the dentition model may include the trimline, and the program code may further cause the system to modify the trimline based on the one or more differences between the pre-use mold model and the aligner model to generate the modified trimline, use the modified trimline to define the tool path, and guide the cutting tool along the tool path to remove the region of the workpiece between the aligner and the waste portion of the workpiece.

In another embodiment of the system, the workpiece may be the first workpiece, and the program code may further cause the system to adjust the thermoforming process for the second workpiece made after the first workpiece based on the one or more differences between the pre-use mold model and the aligner model.

In another embodiment of the system, the first workpiece may have failed, and the second workpiece may be fabricated to replace the first workpiece.

In another embodiment of the system, the dentition model may be one dentition model of the patient at one stage of orthodontic treatment, the first workpiece may have passed, and the second workpiece may be fabricated using another mold fabricated based on another dentition model of the patient at another stage of orthodontic treatment.

In another embodiment of the system, the workpiece may be scanned while on the mold to generate the aligner model, and the program code may further cause the system to overlay the pre-use mold model onto the aligner model to identify the demarcation between the inner surface of the workpiece and the outer surface of the mold.

In another embodiment of the system, the aligner model may be the first aligner model, and the program code may further cause the system to scan at least a portion of the outer surface of the workpiece to generate the second aligner model representing the portion of the outer surface of the workpiece, compare the first aligner model and the second aligner model to determine the thickness of the workpiece, determine if the thickness of the workpiece meets the acceptance criteria, fail the workpiece if the thickness of the workpiece does not meet the acceptance criteria, and pass the workpiece if the thickness of the workpiece meets the acceptance criteria.

In another aspect of the disclosure, another computer program product is provided. The computer program product includes a non-transitory computer-readable storage medium, and program code stored on the non-transitory computer-readable storage medium. The program code is configured so that, when executed by one or more processors, the program code causes the one or more processors to scan the mold fabricated based on the dentition model representing the dentition of the patient at the stage of orthodontic treatment to generate the pre-use mold model representing an outer surface of the mold, scan at least the portion of the inner surface of the workpiece fabricated from the mold using the thermoforming process to generate the aligner model representing the portion of the inner surface of the workpiece, compare the pre-use mold model and the aligner model, identify the one or more differences between the pre-use mold model and the aligner model based on the comparison, fail the workpiece if at least one of the one or more differences exceeds the threshold, and pass the workpiece if none of the one or more differences exceeds the threshold.

According to a first aspect of the present invention there is provided a method of fabricating an orthodontic aligner, comprising
receiving a dentition model representing a dentition of a patient at a stage of orthodontic treatment;
fabricating a mold based on the dentition model using a mold fabrication process;
scanning the mold to generate a pre-use mold model representing an outer surface of the mold;
comparing the pre-use mold model and the dentition model;
identifying one or more differences between the pre-use mold model and the dentition model based on the comparison;
failing the mold if at least one of the one or more differences exceeds a first threshold; and
passing the mold if none of the one or more differences exceeds the first threshold.

Preferably the mold is a first mold, and further comprising:
adjusting the mold fabrication process for a second mold made after the first mold based on the one or more differences between the pre-use mold model and the dentition model.

Preferably the first mold failed, and the second mold is fabricated based on the dentition model to replace the first mold.

Preferably the dentition model is one dentition model of the patient at one stage of orthodontic treatment, the first mold passed, and the second mold is fabricated based on another dentition model of the patient at another stage of orthodontic treatment.

Preferably the method further comprises:
in response to passing the mold, thermoforming a sheet of thermoformable material over the mold to produce a workpiece having an inner surface formed at least in part by contact with the mold;
scanning at least a portion of the inner surface to generate an aligner model representing the portion of the inner surface of the workpiece;
comparing the pre-use mold model and the aligner model;
identifying one or more differences between the pre-use mold model and the aligner model based on the comparison between the pre-use mold model and the aligner model;
failing the workpiece if at least one of the one or more differences exceeds a second threshold; and
passing the workpiece if none of the one or more differences exceeds the second threshold.

Preferably the dentition model includes a trimline, and the method further comprises:
using the trimline to define a tool path; and
guiding a cutting tool along the tool path to remove a region of the workpiece between an aligner and a waste portion of the workpiece such that the aligner is separated from the waste portion of the workpiece,
wherein scanning the at least the portion of the inner surface includes scanning the aligner after the aligner has been separated from the waste portion of the workpiece.

Preferably the dentition model includes a trimline, and the method further comprises:
in response to passing the mold, thermoforming a sheet of thermoformable material over the mold to produce a workpiece having an inner surface formed at least in part by contact with the mold using a thermoforming process;
using the trimline to define a tool path;
guiding a cutting tool along the tool path to remove a region of the workpiece between an aligner and a waste portion of the workpiece such that the aligner is separated from the waste portion of the workpiece, the cutting tool cutting a channel in the mold as the cutting tool moves along the tool path;
scanning the mold including the channel to generate a post-use mold model including a representation of the channel;
comparing the post-use mold model and the dentition model;
identifying one or more differences between a position of the channel and the position of the trimline based on the comparison between the post-use mold model and the dentition model; and
modifying one or more parameters of at least one of the mold fabrication process or the thermoforming process based on the one or more differences between the position of the channel and the position of the trimline.

Preferably the dentition model includes a trimline, and the method further comprises:
in response to passing the mold, thermoforming a sheet of thermoformable material over the mold to produce a workpiece having an inner surface formed at least in part by contact with the mold;
using the trimline to define a tool path;
adjusting the tool path based on the one or more differences between the pre-use mold model and the dentition model; and
guiding a cutting tool along the adjusted tool path to remove a region of the workpiece between an aligner and a waste portion of the workpiece such that the aligner is separated from the waste portion of the workpiece.

Preferably the pre-use mold model includes a plurality of first points, and the dentition model includes a plurality of second points, and identifying the one or more differences between the pre-use mold model and the detention model includes:
registering the pre-use mold model and the dentition model;
creating a plurality of matched pairs each comprising a first point from the pre-use mold model and a second point from the dentition model closest to the first point from the pre-use mold model;
determining a distance between the first point and the second point of each matched pair;
classifying areas of the pre-use mold model where the distances are less than a threshold as within a specification; and
classifying areas of the pre-use mold model where the distances are greater than the threshold as not within the specification.

Preferably classifying areas of the pre-use mold model includes:
adding each first point of each matched pair for which the distance is greater than the threshold to a list of questionable points;
determining if any sets of points on the list of questionable points define a connected region;
in response to determining no sets of points on the list of questionable points define a connected region, pass the mold;
in response to determining at least one set of points on the list of questionable points defines a respective connected region, for each connected region:
   defining a geometric shape of the connected region,
   defining a geometric volume of the connected region based on the geometric shape, and
   defining a Voronoi volume for the connected region based on the points in the connected region;
   in response to the Voronoi volume being greater than the geometric volume for any connected region, failing the mold; and
   in response to the Voronoi volume not being greater than the geometric volume for any connected region, passing the mold.

According to a second aspect of the present invention there is provided a system, comprising:
one or more processors; and
a memory coupled to the one or more processors and including program code that, when executed by the one or more processors, causes the system to:
   receive a dentition model representing a dentition of a patient at a stage of orthodontic treatment;
   scan a mold fabricated based on the dentition model to generate a pre-use mold model representing an outer surface of the mold;
   compare the pre-use mold model and the dentition model;
   identify one or more differences between the pre-use mold model and the dentition model based on the comparison;
   fail the mold if at least one of the one or more differences exceeds a first threshold; and
   pass the mold if none of the one or more differences exceeds the first threshold.

Preferably the mold is a first mold, and the program code further causes the system to:
adjust a fabrication process for a second mold made after the first mold based on the one or more differences between the pre-use mold model and the dentition model.

Preferably the first mold failed, and the second mold is fabricated based on the dentition model to replace the first mold.

Preferably the dentition model is one dentition model of the patient at one stage of orthodontic treatment, the first mold passed, and the second mold is fabricated based on another dentition model of the patient at another stage of orthodontic treatment.

Preferably a sheet of thermoformable material is thermoformed over the mold to produce a workpiece having an inner surface formed at least in part by contact with the mold in response to passing the mold, and the program code further causes the system to:
scan at least a portion of the inner surface to generate an aligner model representing the portion of the inner surface of the workpiece;
compare the pre-use mold model and the aligner model;
identify one or more differences between the pre-use mold model and the aligner model based on the comparison between the pre-use mold model and the aligner model;
fail the workpiece if at least one of the one or more differences exceeds a second threshold; and
pass the workpiece if none of the one or more differences exceeds the second threshold.

Preferably the dentition model includes a trimline, and the program code further causes the system to:
use the trimline to define a tool path configured to guide a cutting tool to remove a region of the workpiece between an aligner and a waste portion of the workpiece such that the aligner is separated from the waste portion of the workpiece,
wherein scanning the at least the portion of the inner surface includes scanning the aligner after the aligner has been separated from the waste portion of the workpiece.

Preferably the dentition model includes a trimline, and the program code further causes the system to:
use the trimline to define a tool path configured to guide a cutting tool to remove a region of a workpiece between an aligner and a waste portion of the workpiece such that the aligner is separated from the waste portion of the workpiece and the cutting tool cuts a channel in the mold as the cutting tool moves along the tool path;
scan the mold including the channel to generate a post-use mold model including a representation of the channel;
compare the post-use mold model and the dentition model;
identify one or more differences between a position of the channel and the position of the trimline based on the comparison between the post-use mold model and the dentition model; and
modify one or more parameters of at least one of a mold fabrication process or a thermoforming process based on the one or more differences between the position of the channel and the position of the trimline.

Preferably the dentition model includes a trimline, and the program code further causes the system to:
use the trimline to define a tool path; and
adjust the tool path based on the one or more differences between the pre-use mold model and the dentition model,
wherein a cutting tool is guided along the adjusted tool path to remove a region of a workpiece between an aligner and a waste portion of the workpiece such that the aligner is separated from the waste portion of the workpiece.

Preferably the pre-use mold model includes a plurality of first points, the dentition model includes a plurality of second points, and the program code causes the system to identify the one or more differences between the pre-use mold model and the detention model by:
registering the pre-use mold model and the dentition model;
creating a plurality of matched pairs each comprising a first point from the pre-use mold model and a second point from the dentition model closest to the first point from the pre-use mold model;
determining a distance between the first point and the second point of each matched pair;
classifying areas of the pre-use mold model where the distances are less than a threshold as within a specification; and
classifying areas of the pre-use mold model where the distances are greater than the threshold as not within the specification.

Preferably the program code causes the system to classify areas of the pre-use mold model by:
adding each first point of each matched pair for which the distance is greater than the threshold to a list of questionable points;
determining if any sets of points on the list of questionable points define a connected region;
in response to determining no sets of points on the list of questionable points define a connected region, pass the mold;
in response to determining at least one set of points on the list of questionable points defines a respective connected region, for each connected region:
   defining a geometric shape of the connected region,
   defining a geometric volume of the connected region based on the geometric shape, and
   defining a Voronoi volume for the connected region based on the points in the connected region;
   in response to the Voronoi volume being greater than the geometric volume for any connected region, failing the mold; and
   in response to the Voronoi volume not being greater than the geometric volume for any connected region, passing the mold.

According to a third aspect of the present invention there is provided a computer program product comprising:
a non-transitory computer-readable storage medium; and
program code stored on the non-transitory computer-readable storage medium that, when executed by one or more processors, causes the one or more processors to:
   receive a dentition model representing a dentition of a patient at a stage of orthodontic treatment;
   scan a mold fabricated based on the dentition model to generate a pre-use mold model representing an outer surface of the mold;
   compare the pre-use mold model and the dentition model;
   identify one or more differences between the pre-use mold model and the dentition model based on the comparison;
   fail the mold if at least one of the one or more differences exceeds a first threshold; and
   pass the mold if none of the one or more differences exceeds the first threshold.

According to a fourth aspect of the present invention there is provided a method of fabricating an orthodontic aligner, comprising
fabricating a mold based on a dentition model representing a dentition of a patient at a stage of orthodontic treatment using a mold fabrication process;
scanning the mold to generate a pre-use mold model representing an outer surface of the mold;
thermoforming a sheet of thermoformable material over the mold using a thermoforming process to produce a workpiece having an inner surface formed at least in part by contact with the mold;
scanning at least a portion of the inner surface to generate an aligner model representing the portion of the inner surface of the workpiece;
comparing the pre-use mold model and the aligner model;
identifying one or more differences between the pre-use mold model and the aligner model based on the comparison between the pre-use mold model and the aligner model;
failing the workpiece if at least one of the one or more differences exceeds a threshold; and
passing the workpiece if none of the one or more differences exceeds the threshold.

Preferably the dentition model includes a trimline, and the method further comprises:
modifying the trimline based on the one or more differences between the pre-use mold model and the aligner model to generate a modified trimline;
using the modified trimline to define a tool path; and
guiding a cutting tool along the tool path to remove a region of the workpiece between an aligner and a waste portion of the workpiece.

Preferably the workpiece is a first workpiece, and the method further comprises:
adjusting the thermoforming process for a second workpiece made after the first workpiece based on the one or more differences between the pre-use mold model and the aligner model.

Preferably the first workpiece failed, and the second workpiece is fabricated to replace the first workpiece.

Preferably the dentition model is one dentition model of the patient at one stage of orthodontic treatment, the first workpiece passed, and the second workpiece is fabricated using another mold fabricated based on another dentition model of the patient at another stage of orthodontic treatment.

Preferably the workpiece is scanned while on the mold to generate the aligner model, and further comprising:
overlaying the pre-use mold model onto the aligner model to identify a demarcation between the inner surface of the workpiece and the outer surface of the mold.

Preferably the aligner model is a first aligner model, and further comprising:
scanning at least a portion of an outer surface of the workpiece to generate a second aligner model representing the portion of the outer surface of the workpiece;
comparing the first aligner model and the second aligner model to determine a thickness of the workpiece;
determining if the thickness of the workpiece meets an acceptance criteria;
failing the workpiece if the thickness of the workpiece does not meet the acceptance criteria; and
passing the workpiece if the thickness of the workpiece meets the acceptance criteria.

According to a fifth embodiment of the present invention there is provided a system, comprising:
one or more processors; and
a memory coupled to the one or more processors and including program code that, when executed by the one or more processors, causes the system to:
   scan a mold fabricated based on a dentition model representing a dentition of a patient at a stage of orthodontic treatment to generate a pre-use mold model representing an outer surface of the mold;
   scan at least a portion of an inner surface of a workpiece fabricated from the mold using a thermoforming process to generate an aligner model representing the portion of the inner surface of the workpiece;
   compare the pre-use mold model and the aligner model;
   identify one or more differences between the pre-use mold model and the aligner model based on the comparison between the pre-use mold model and the aligner model;
   fail the workpiece if at least one of the one or more differences exceeds a threshold; and
   pass the workpiece if none of the one or more differences exceeds the threshold.

Preferably the dentition model includes a trimline, and the program code further causes the system to:
modify the trimline based on the one or more differences between the pre-use mold model and the aligner model to generate a modified trimline;
use the modified trimline to define a tool path; and
guide a cutting tool along the tool path to remove a region of the workpiece between an aligner and a waste portion of the workpiece.

Preferably the workpiece is a first workpiece, and the program code further causes the system to:
adjust the thermoforming process for a second workpiece made after the first workpiece based on the one or more differences between the pre-use mold model and the aligner model.

Preferably the first workpiece failed, and the second workpiece is fabricated to replace the first workpiece.

Preferably the dentition model is one dentition model of the patient at one stage of orthodontic treatment, the first workpiece passed, and the second workpiece is fabricated using another mold fabricated based on another dentition model of the patient at another stage of orthodontic treatment.

Preferably the workpiece is scanned while on the mold to generate the aligner model, and the program code further causes the system to:
overlay the pre-use mold model onto the aligner model to identify a demarcation between the inner surface of the workpiece and the outer surface of the mold.

Preferably the aligner model is a first aligner model, and the program code further causes the system to:
scan at least a portion of an outer surface of the workpiece to generate a second aligner model representing the portion of the outer surface of the workpiece;
compare the first aligner model and the second aligner model to determine a thickness of the workpiece;
determine if the thickness of the workpiece meets an acceptance criteria;
fail the workpiece if the thickness of the workpiece does not meet the acceptance criteria; and
pass the workpiece if the thickness of the workpiece meets the acceptance criteria.

According to a sixth embodiment of the present invention there is provided a computer program product comprising:
a non-transitory computer-readable storage medium; and
program code stored on the non-transitory computer-readable storage medium that, when executed by one or more processors, causes the one or more processors to:
   scan a mold fabricated based on a dentition model representing a dentition of a patient at a stage of orthodontic treatment to generate a pre-use mold model representing an outer surface of the mold;
   scan at least a portion of an inner surface of a workpiece fabricated from the mold using a thermoforming process to generate an aligner model representing the portion of the inner surface of the workpiece;
   compare the pre-use mold model and the aligner model;
   identify one or more differences between the pre-use mold model and the aligner model based on the comparison between the pre-use mold model and the aligner model;
   fail the workpiece if at least one of the one or more differences exceeds a threshold; and
   pass the workpiece if none of the one or more differences exceeds the threshold.

### BRIEF DESCRIPTION OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.
Fig. 1 is a diagrammatic view of a portion of an exemplary fabrication process including a dentition model, a mold fabricated based on the dentition model, and a scanner that generates a pre-use mold model by scanning the mold.
Fig. 2 is a diagrammatic view illustrating another portion of the exemplary fabrication process including a thermoforming process that uses the mold to fabricate a workpiece.
Fig. 3 is a diagrammatic view of another portion of the exemplary fabrication process that includes trimming the workpiece to separate the aligner from a waste portion thereof, and one or more scanners that generate an aligner model by scanning the aligner and a post-use mold model by scanning the mold.
Fig. 4 is a cross-sectional view of a portion of the aligner on the mold.
Fig. 5 is a flowchart illustrating an exemplary quality inspection process.
Fig. 6 is a diagrammatic view graphically illustrating the process of Fig. 5.
Fig. 7 is a diagrammatic view of an exemplary region of a model having a concentrated negative deviation.
Fig. 8 is a flowchart illustrating an exemplary detection process for detecting a region having a concentrated negative deviation.
Figs. 9-11 are diagrammatic views illustrating a relationship between defects in an aligner, hole radius, and the thickness of a sheet used in a thermoforming process.
Fig. 12 is a diagrammatic view of an exemplary region of a model having a concentrated positive deviation.
Fig. 13 is a flowchart illustrating an exemplary process for detecting a region having a concentrated positive deviation.
Fig. 14 is a diagrammatic view of an exemplary operating environment including a manufacturing line for fabricating aligners, a database, and a server in communication with one or more systems of the manufacturing line.
Fig. 15 is a diagrammatic view of a computer that may be used to implement one or more of the components or processes shown in Figs. 1-14.

It should be understood that the appended drawings are not necessarily to scale, and may present a somewhat simplified representation of various features illustrative of the basic principles of the invention. The specific design features of the sequence of operations disclosed herein, including, for example, specific dimensions, orientations, locations, and shapes of various illustrated components, may be determined in part by the particular intended application and use environment. Certain features of the illustrated embodiments may have been enlarged or distorted relative to others to facilitate visualization and a clear understanding. In particular, thin features may be thickened, for example, for clarity or illustration.

### DETAILED DESCRIPTION

Embodiments of the present invention include generating a computer model of a mold (referred to herein as a "pre-use mold model") by scanning the mold before the mold is used to manufacture a workpiece. The pre-use mold model may be compared to a target computer model, such as a computer model of the patient's dentition ("dentition model") that was used to fabricate the mold. This comparison between source and target models may identify defects that occurred during fabrication of the mold, such as defects introduced by a 3-D printing process. The results of this comparison may also be used to adjust a trimline to account for variations from the dentition model caused by the mold fabrication process, and to provide feedback to the mold fabrication process to improve accuracy on subsequent mold fabrications.

Specifically, and with regard to the fabrication process, data for leading indicators such as mean deviation may be utilized as a source of an automated "live" feedback loop to the fabrication equipment, triggering automatic adjustments. This may include an automated feedback loop from the aligner inspection data to the thermoforming equipment, or an automated feedback loop from the pre-use mold inspection data to the 3-D printed mold fabrication equipment. Thus, the feedback to the mold fabrication process may not only be specific to remaking a single failed mold and providing adjustment data for that single part, but may also be used to make broader adjustments that affect the fabrication of subsequent molds.

The mold may also be scanned after thermoforming and trimming of the workpiece to generate a "post-use model" of the mold. The post-use model may be used as a source model to detect defects that occurred during the trimming process by comparing the post-use mold model to one or both the dentition model and the pre-use mold model.

The orthodontic aligner ("aligner") may also be scanned, either before or after it has been trimmed away from the workpiece, to generate an aligner model. The aligner model may be used to detect defects that occurred during the thermoforming process by comparing the aligner model to the pre-use mold model. Certain defects in the aligner found prior to trimming may be mitigated by adjusting the trimming process. The aligner may be scanned while it is still attached to the mold, after it has been removed from the mold, or both before and after it has been removed from the mold.

Generating a pre-use mold model may enable manufacturing teams to detect defects and conclusively isolate the defects' point of origin to a particular step in the aligner manufacturing process. This is an improvement over known methods of quality control in the manufacture of aligners because it allows for more efficient root cause analysis and implementation of countermeasures. It also allows defective parts to be removed earlier in the manufacturing process before further labor and materials are expended on the defective product. Some defective parts can also be corrected by the operator prior to causing a permanent defect. For example, debris can be cleaned off a mold manually prior to thermoforming. Advantageously, inspecting at the pre-use mold model stage may enable the identification and removal of debris that could otherwise cause a permanent defect on the aligner and the mold such that the aligner would need to be remade.

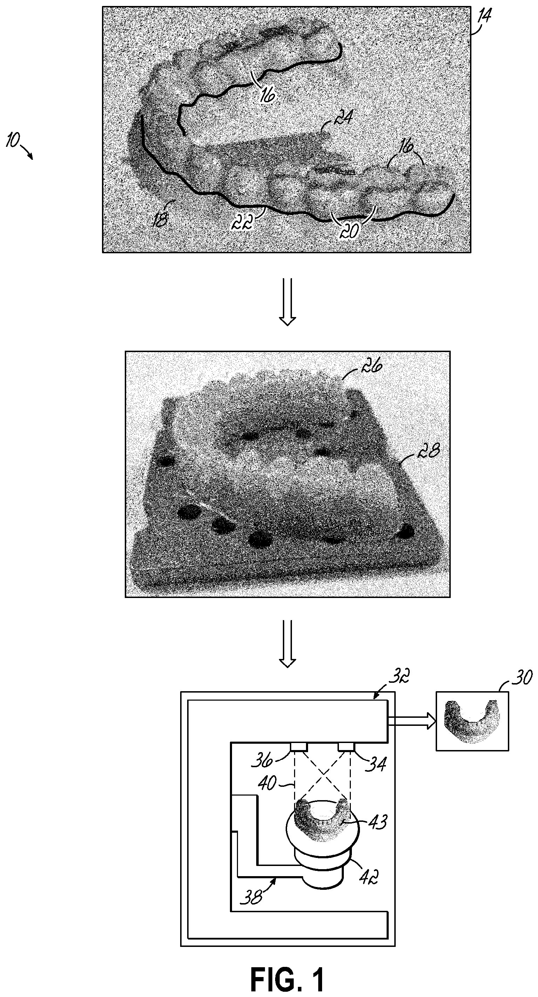

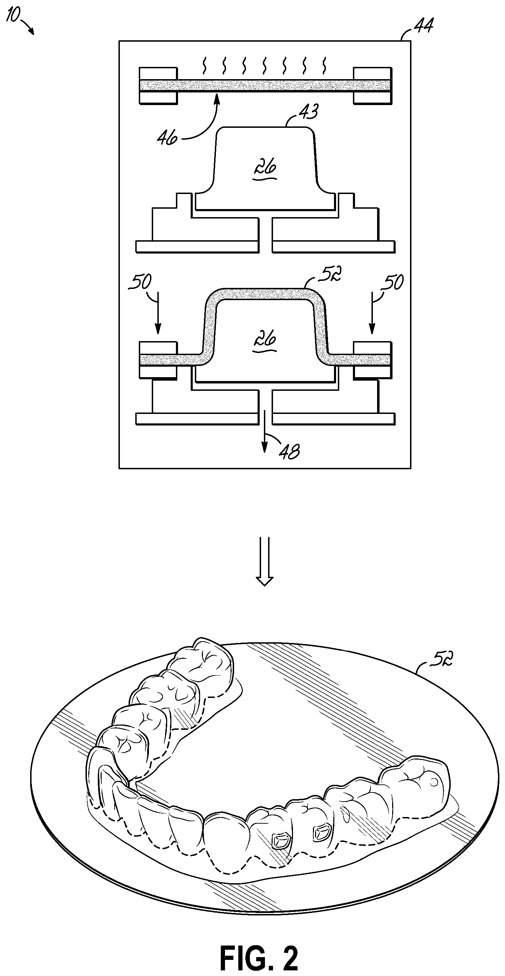

Figs. 1-3 present a graphic depiction illustrating an exemplary fabrication process 10 for manufacturing an aligner 12 based on a dentition model 14. The dentition model 14 may be a 3-D computer model representing the patient's teeth at a specific stage of treatment. The aligner 12 may be one of a plurality of aligners (not shown) each fabricated based on a respective dentition model 14 corresponding to a specific stage of orthodontic treatment. Accordingly, the dentition model 14 may be one of a series of dentition models 14 that provides incremental steps from an initial orientation to a target orientation of a treatment plan.

As best shown by Fig. 1, the exemplary dentition model 14 may include a plurality of crowns of modeled teeth 16 on one of a maxillary jaw (not shown) or mandibular jaw (depicted). The modeled teeth 16 are shown projecting from a modeled gingiva 18. The modeled gingiva 18 may be computer generated (e.g., as a point cloud) and positioned on the modeled teeth 16 to conform with image data used to generate the modeled teeth 16. Specifically, a point cloud may be generated from image data of the patient's teeth, e.g., by a 3-D scanner. A process known as tessellation may be used to transform the point cloud into a continuous surface comprising a plurality of geometric shapes, e.g., triangles. These shapes (commonly referred to as "tiles") may define a mesh representing the surface of the patient's teeth and gingiva, with each point in the point cloud corresponding to a vertex of the mesh. As a result, the modeled gingiva 18 may be generated at locations consistent with the intraoral scan imagery. The segmented gingival surface may comprise the scan model of the upper and lower arches excluding the segmented surfaces of the teeth crowns.

A dentition model 14 including both modeled teeth 16 and a modeled gingiva 18 may be prepared for each stage of orthodontic treatment in the treatment plan. Each detention model 14 may be prepared by defining a control point for each tile on the gingival surface, and transferring this control point in space - along with the associated tile - on movement paths that match the movement of the nearest modeled tooth 16 to the gingival area where the control point is defined. To this end, the modeled gingiva 18 of each stage in the orthodontic treatment plan may be deformed based on the movement of the modeled teeth 16 relative to the previous stage. In some treatment plans, one or more of the patient's teeth may include an attachment, which is a small feature that may be engaged by the aligner 12 to provide extra grip or pressure for especially problematic teeth. Thus, dentition models 14 may include one or more modeled attachments 20 so that the aligners 12 produced therefrom are configured to receive the attachments when worn by the patient. The dentition model 14 may also include a trimline 22 and a tag 24. The trimline 22 may be added to the dentition model 14 and used to guide a trimming machine after the aligner has been formed. The tag 24 may also be added to the dentition model 14 and include information about the dentition model 14 in a human readable form, such as the identity of the patient and the aligner's relative position in the treatment plan.

With continued reference to Fig. 1, the fabrication process 10 may fabricate a mold 26 based on the dentition model 14. Molds 26 may be fabricated for each dentition model 14 of the treatment plan using a subtractive, additive, or other suitable fabrication process. One suitable fabrication process may involve an ultraviolet (UV) resin-based 3-D printing process, such as stereolithography (SLA) or digital light processing (DLP). This type of additive process may include depositing a thin layer of liquid material (e.g., a photopolymer resin sensitive to UV light - not shown) onto a substrate 28. After the layer of material has been deposited, a UV light source may be used to selectively cure the material according to a pattern representing a horizontal layer of the dentition model 14. The UV light may be applied in various ways, e.g., by using a laser to trace the pattern on the resin layer, or by using a digital projector to project an image of the pattern onto the layer. The process of depositing a layer of resin and curing a pattern in the layer may be repeated multiple times until the mold 26 is fully formed on the substrate 28. Excess uncured resin may then be removed, followed by additional UV curing to further harden the material, if necessary. Although only one mold 26 is shown in Fig. 1, it should be understood that in some embodiments, multiple molds 26 may be printed and cured simultaneously as part of a batch process. For example, in one embodiment of fabrication process 10, eighteen molds may be fabricated at a time.

After the mold 26 has been fabricated, but prior to using the mold 26 to form an aligner, the fabrication process 10 may generate a 3-D computer model of the mold 26 (referred to as a pre-use mold model 30) using a suitable method of scanning the mold 26. By way of example, the pre-use mold model 30 may be generated by a structured-light 3-D scanner 32 including a projector 34, a camera 36, and a multi-axis positioner 38, e.g., a four or five-axis positioner. The projector 34 may project a light pattern 40 onto the mold 26 that includes a plurality of parallel lines, a grid, or any other suitable features that facilitates mapping points in a two-dimensional (2-D) image captured by the camera 36 into a 3-D virtual space. The projector 34 may use a specific color of light (e.g., blue light) to facilitate distinguishing portions of the mold 26 illuminated by the light pattern 40 from portions of the mold 26 not illuminated by the light pattern 40, e.g., portions illuminated only by ambient light. During the scanning process, the mold 26 may be oriented at various angles to the projector 34 and camera 36. To this end, the mold may be mounted to a platform 42 that is attached to the scanner 32 by the multi-axis positioner 38. In an alternative embodiment, the scanner 32 may include multiple cameras or projectors each positioned to capture 2-D images from different vantage points either in addition to, or in place of, the multi-axis positioner 38. Thus, it should be understood that embodiments of the 3-D scanning process are not limited to a particular type or configuration of 3-D scanner.

The scanner 32 may capture 2-D images of the light pattern 40 projected onto the mold 26 from each of a plurality of orientations. The scanner 32 may compare these images of the projected light pattern 40 to how the light pattern 40 would have appeared if it had been projected onto a flat surface at the same angle and focal distance from the camera 36. The scanner 32 may thereby obtain multiple 2-D images of the same spot for each of a plurality of spots on the mold 26. Algorithms in the scanner may merge the 2-D images together to generate the pre-use mold model 30 by assigning coordinates (e.g., x, y, and z-coordinates) to each pixel using triangulation. Each point in the 2-D images may thereby be mapped into a 3-D virtual space to define a point cloud representing the outer surface 43 of mold 26. Tessellation may then be used to transform the 3-D point cloud into a continuous surface comprising a plurality of tiles. These tiles may define a mesh representing the scanned outer surface 43 of mold 26. The resulting pre-use mold model 30 may be formatted, for example, as a stereolithography (STL) file. Stereolithography files typically define each tile of the surface by the coordinates of each vertex and a unit normal vector of the tile.

After the pre-use mold model 30 of mold 26 has been generated, the fabrication process 10 may fabricate a workpiece using the mold 26, e.g., through a thermoforming process 44. By way of example, the thermoforming process 44 may include heating a sheet 46 (e.g., a sheet of thermoformable material such as polymethyl methacrylate (PMMA)) until the sheet 46 becomes pliable, and positioning the sheet 46 over the mold 26. A vacuum may then be applied between the sheet 46 and the mold 26 as the sheet 46 is moved downward onto the mold 26 (as indicated by respective arrows 48, 50) to draw the sheet 46 into close contact with the mold 26. The thermoforming process 44 may thereby shape the sheet 46 into the desired form. After the sheet 46 has been fully formed around the mold 26, the sheet 46 may be allowed to cool and solidify to define the workpiece 52, and the vacuum released.

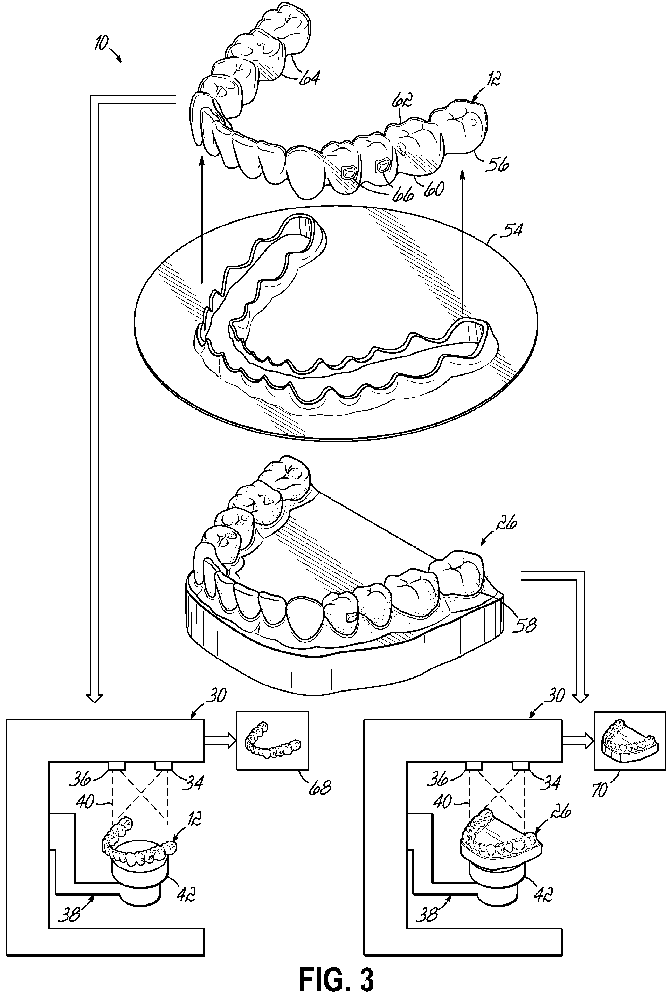

As best shown by Fig. 3, after the workpiece 52 has been fabricated, the fabrication process 10 may separate the aligner 12 from a waste portion 54 of the workpiece 52 by removing a region of workpiece 52 between the aligner 12 and waste portion 54 thereof, e.g., using a cutting tool (not shown). The cutting tool may be operatively coupled a computer controlled machine (e.g., a computer numerical control (CNC) machine) that moves the tool along a tool path corresponding to the trimline 22 of dentition model 14. The tool path may be defined by converting the digital data defining the trimline 22 into machine code for controlling the machine. The tool path may thereby be used to produce an aligner 12 with an edge 56 correlated with the trimline 22 embedded in the dentition model 14. The cutting tool may have a tool radius *r* such that each point on the edge 56 of aligner 12 is a distance *r* from the closest point on the trimline 22. In addition to removing the region between the aligner 12 and waste portion 54 of workpiece 52, the cutting tool may leave a channel 58 in the mold 26. After the cutting tool has removed the region between the aligner 12 and the waste portion 54, the aligner 12 and waste portion 54 may be separated from each other and the mold 26.

The aligner 12 may include an inner surface 60 and an outer surface 62. The inner surface 60 may define a plurality of cavities 64 each configured to engage a crown of a tooth when the aligner 12 is worn by the patient. Each cavity 64 may be sized and shaped to receive a specific one of the patient's teeth during use of the aligner 12. One or more of the cavities 64 may also include one or more receptacles 66 each configured to engage an attachment on the respective tooth. Exemplary attachments may include an engager (e.g., a small protrusion of dental bonding material) placed at specific locations on selected teeth. The attachment may have any of a variety of shapes including rectangular, square, circular, ellipsoidal, or triangular. Each receptacle 66 may be sized and shaped to receive at least a portion of the attachment during orthodontic treatment and provide a specific predetermined force via the attachment on the corresponding tooth or on another tooth engaged with the aligner 12 during treatment.

In certain embodiments, one or both of the aligner 12 and the mold 26 may be scanned to generate a 3-D computer model thereof. In the case of the aligner 12, the fabrication process 10 may scan one or both of the inner surface 60 and outer surface 62 of aligner 12 to generate an aligner model 68. Scanning both the inner surface 60 and outer surface 62 of the aligner 12 may enable the thickness of the aligner 12 to be determined. The thickness of the aligner 12 may have specific acceptance criteria and clinical significance. In the case of the mold 26, the fabrication process 10 may scan the outer surface 43 of the mold 26 to generate a post-use mold model 70. The post-use mold model 70 may include a representation of the channel 58 cut by the trimming process for comparison with the trimline 22 of dentition model 14. As described in more detail below, these 3-D computer models may be compared to one or more of the pre-use mold model 30 and the dentition model 14 used to fabricate the mold 26. These comparisons may then be used for one or more of quality control (e.g., identifying product defects) and fine tuning fabrication processes (e.g., the mold fabrication and thermoforming processes). In an alternative embodiment of the fabrication process 10, the inner surface 60 of aligner 12 may be scanned while the workpiece 52 is still on the mold 26, e.g., before trimming, after trimming, or both before and after trimming. This may be accomplished, for example, using an X-ray scanning process, such as a computer tomography (CT) scan.

In general, the best clinical results may be achieved when each aligner 12 is a perfect representation of its respective dentition model 14, as the dentition models 14 are generally the most accurate representation of the prescribed treatment. However, manufacturing limitations and variations mean the inner surface 60 of an aligner 12 typically does not perfectly match the respective dentition model 14. Accordingly, one objective of manufacturing aligners 12 may be to minimize the deviation between aligners 12 and their dentition models 14.

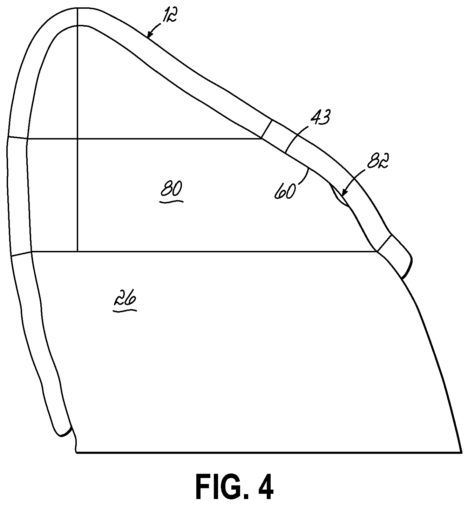

Fig. 4 presents a cross-sectional view of an aligner 12 on a mold 26 after thermoforming, and shows a relationship between the outer surface 43 of mold 26 and the inner surface 60 of aligner 12. One type of defect that may be introduced is when a region of the mold 26 does not perfectly match the dentition model 14. For example, when the mold fabrication process fails to accurately reproduce the shape of the dentition model 14 over a portion of the mold 26, such as in region 80. These types of defects may be due to errors in, or the inherent limitations of, the mold fabrication process. Another type of defect may be introduced when the thermoforming process leaves an air gap 82 between the outer surface 43 of mold 26 and the inner surface 60 of aligner 12. These types of defects may be due to errors in, or the inherent limitations of, the thermoforming process. Another type of defect may be introduced when an edge 56 of aligner 12 does not perfectly align with the trimline 22 of dentition model 14. These types of defects may be due to errors in, or the inherent limitations of, the trimming process. Different types of defects can sometimes produce similar features in the aligner 12, such that it is often difficult to determine which part of the multi-step fabrication process 10 needs improvement based solely on inspection of the aligner 12. Thus, if a deviation exists between the aligner 12 and the dentition model 14, it may be challenging to determine which fabrication step created the deviation, e.g., mold fabrication, thermoforming, or trimming.

Scanning the mold 26 to generate the pre-use mold model 30, and comparing the pre-use mold model 30 to one or more of the dentition model 14 and aligner model 68 addresses the above problems with identifying the source of defects by enabling detection at each stage of the fabrication process 10. This provides advantages in both the quality of the final product and reduced costs. With regard to quality, once the source of a defect is determined, the effect of process improvements can be measured in isolation. This may provide more accurate and direct feedback on process improvements than merely measuring the collective results of both processes. The pre-use mold model 30 may enable detection of defects in the mold 26 prior to thermoforming of the workpiece 52. If a defect found in the mold 26 is sufficient to cause a major defect in the aligner 12 (e.g., a defect that would require fabrication of a replacement aligner 12), the waste associated with thermoforming the defective aligner 12 can be avoided. Thus, early detection of defects may reduce costs due to wasted materials, time, labor, and wear and tear on the thermoforming and trimming machines.

Comparing the pre-use mold model 30 and the dentition model 14 may enable defects to be conclusively isolated to the 3-D printing process. Another advantage provided by generating the pre-use mold model 30 is that scanning the mold 26, which is typically opaque, may be more cost effective (e.g., by an order of magnitude) than scanning an aligner 12 made from a clear material. Clear aligners 12 typically require a CT scan or other type of X-ray scanning technology because visible light-based scanners are often unable to image transparent aligner materials. X-ray based systems are more expensive, slower, and have inherent safety concerns due to the use of ionizing radiation. In contrast, the mold 26 can be scanned using visible light scanners, which are faster and safer than X-ray scanners.

Early detection of defects may also enable the tool path to be adjusted prior to cutting the workpiece 52 to compensate for variations that occurred in the mold fabrication process. This may also reduce manufacturing scrap rates by allowing some molds 26 that would otherwise have to be scrapped and re-printed to be salvaged through adjustments to the trimming process or the mold itself. Comparing the post-use mold model 70 to one or more of the dentition model 14 or the pre-use mold model 30 may also enable the identification of differences that are caused by the trimming process. The aligner model 68 may be used to identify differences between the inner surface 60 of aligner 12 through comparison to the pre-use mold model 30. This information may provide manufacturing teams with evidence that those differences are due to the thermoforming process.

The above examples of early detection of defects may enable manufacturing teams to focus resources and effort towards countermeasures directly at the point of occurrence, e.g., the mold fabrication process, thermoforming process, or trimming process. It may also allow defects to be identified and addressed before investing more labor and material costs into further processing of aligners 12 using a defective mold 26 or workpiece 52.

For embodiments in which an X-ray scan is taken of an aligner 12 before removal from the mold 26, the post-use mold model 70 and aligner model 68 may be generated during a single scanning process, thereby saving a step. In cases where the inner surface 60 of aligner 12 cannot be distinguished from the outer surface 43 of mold 26 on the X-Ray images (e.g., due to the absence of an air gap between the surfaces and similar material densities), the pre-use mold scan may be overlayed onto the X-ray scan to identify a demarcation between these two surfaces in areas where they are not visible.

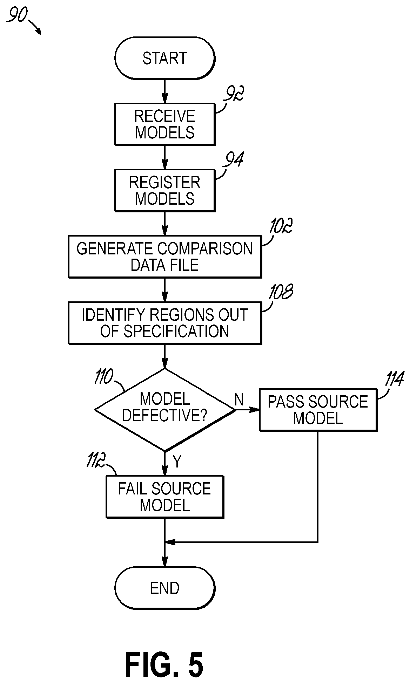

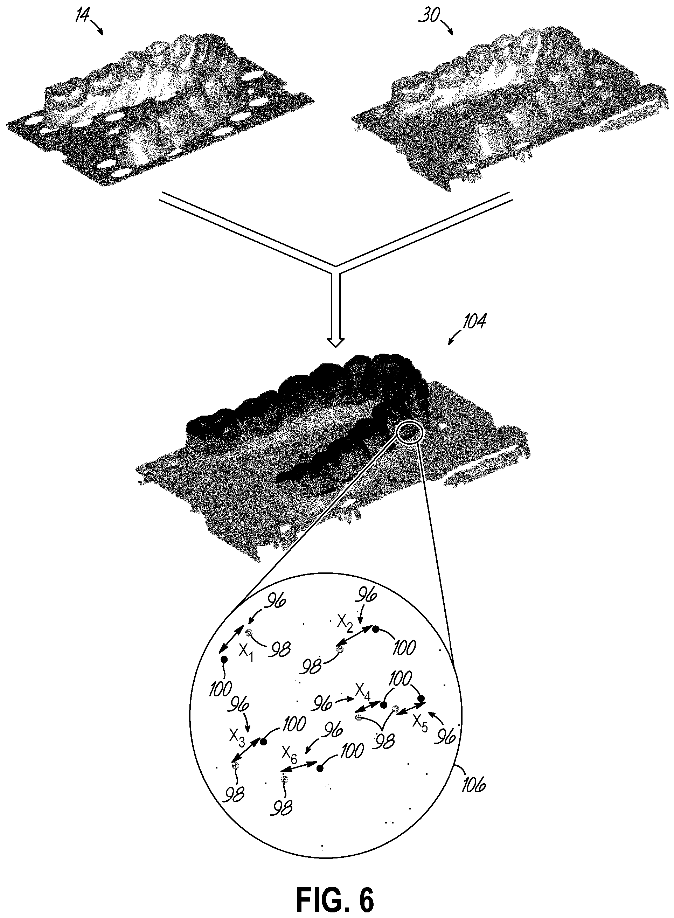

Fig. 5 depicts a flowchart illustrating an exemplary quality inspection process 90 for detecting negative deviations (e.g., holes) that is depicted graphically by Fig. 6. The process 90 may be implemented as part of an aligner fabrication process, such as the exemplary fabrication process 10 described above. In block 92, the process 90 may receive a dentition model 14 and a pre-use mold model 30. The models may be received as point cloud data files, or in some other suitable format, such as a stereolithography file. In cases where a model is received as something other than a point cloud (e.g., as a mesh), the process 90 may extract a point cloud from the model before proceeding to block 94.

In block 94, the process 90 may register the pre-use mold model 30 and the dentition model 14 using a suitable registration algorithm, e.g., an iterative closest point (ICP) registration algorithm. By way of example, the registration algorithm may designate one point cloud (e.g., the dentition model 14) as a target model, and other point cloud (e.g., the pre-use mold model 30) as a source model. The source model may be transformed using a combination of translation and rotation relative to the target model until an error metric is minimized. One error metric that may be used for registration is the sum of squared differences between the coordinates of matched pairs 96 of points in the point clouds. Matched pairs may be determined by, for each point 98 in the source model (e.g., the pre-use mold model 30), identifying the closest point 100 to the same position in the target model (e.g., the dentition model 14). That is, each matched pair 96 may include a source model point 98 (e.g., from the pre-use mold model 30) and a target model point 100 (e.g., from the dentition model 14) that are associated with a common position between the models.

Once the models have been registered to each other, the process 90 may proceed to block 102 and generate a comparison data file 104. The comparison data file 104 may comprise an overlay of the registered dentition and pre-use mold models. As best shown by the magnified view 106 of the comparison data file 104, points 98 associated with the point cloud of the pre-use mold model 30 and points 100 associated with the point cloud of the dentition model 14 may be separately identified to allow comparisons between source model points 98 and target model points 100.

In block 108, the process 90 may identify regions of the pre-use mold model that are out of specification. To this end, the process 90 may determine a distance *Xᵢ* between the points 98, 100 of each matched pair 96. Regions where the distance *Xᵢ* between the points 98, 100 of each matched pair 96 is less than a threshold (e.g., *Xᵢ < dₗᵢₘᵢₜ*) may be considered as within specification. Regions where the distance *Xᵢ* between the points 98, 100 of each matched pair 96 is greater than a threshold (e.g., *Xᵢ > dₗᵢₘᵢₜ*) may be considered as outside specification. The value of the threshold may depend on what area of the aligner 12 would be impacted by the mold 26 being out of specification. For example, holes (or debris) of a larger diameter may be more tolerable in the posterior and lingual areas of the mold than in other areas of the mold. Thus, the threshold may vary based on the clinical significance of the area in question. The distance *Xᵢ* for pairs 96 may be associated with a positive or negative sign to represent the increase or decrease of volume in the pre-use mold as compared to the mold model, the signed distance defines deviation *Dᵢ*. Matched pairs 96 with positive or negative deviation may be used for specific calculations where the deviation sign is important, and different threshold values may be used when identifying a defective mold based on the surface area out of specification for regions with positive and negative deviation.

In block 110, the process 90 may determine if the mold 26 is defective. This determination may be based on the number of matched pairs 96 with a distance *Xᵢ* greater than the threshold. By way of example, areas of the pre-use mold model 30 in which the percentage of matched pairs 96 that are out of specification is above a threshold may be considered as defective. If the amount of surface area *A_{OOS}* of the pre-use mold model 30 associated with points 98 that are part of a matched pair 96 which is out of specification is greater than a threshold surface area *Aₜₕ* (*A_{OOS}* > *Aₜₕ*), the mold 26 may be considered defective. The threshold surface area *Aₜₕ* may represent a predetermined fraction of the total area *Aₜₒₜ* of the pre-use mold model 30 (e.g., *Aₜₕ*/*Aₜₒₜ* = *Pₘₐₓ*), where *Pₘₐₓ* is the maximum allowable percentage of out of specification area. This out of specification area threshold test may be applied to the pre-use mold model 30 as a whole, or to specific portions of the pre-use mold model 30, e.g., a portion of the mold 26 corresponding to a surface of a modeled tooth 16. If the model is defective ("YES" branch of decision block 110), the process 90 may proceed to block 112, reject the mold 26, and terminate. If the model is not defective ("NO" branch of decision block 110), the process 90 may proceed to block 114, pass the mold 26, and terminate.

In an exemplary embodiment, when pre-use mold models 30 are compared to the dentition model 14, the distance between surfaces should be less than a critical deviation *D_{crit}*. A typical value for the critical deviation may be *D_{crit}* = 250 µm. The critical deviation parameter may be used for multiple inspection tests. Each test may work by measuring the distance between each point in the source model (e.g., the pre-use mold model 30, aligner model 68, or post-use mold model 70) and each point in the target model (e.g., the dentition model 14, pre-use mold model 30, aligner model 68, or post-use mold model 70), and comparing the result to the critical deviation variable. There may be thousands of results covering the entire source model, and the quality inspection process in question may evaluate the results in aggregate as a percentage of surface area and produce a "PASS" or "FAIL" result.

One inspection process (referred to herein as the "non-critical area test") may evaluate the measurement over the entire surface area of the source model above the trimline. Another inspection process (referred to herein as the "teeth below critical area test") may evaluate the measurement over each individual tooth crown separately. The critical surface area requirements (e.g., percentage of area where *Xᵢ* < *D_{crit}*) for each of these tests may be, for example, set to 95%. Additional inspection processes may include a total area test, nominal area test, holes test, flats test, debris test, and lines test. Each of these tests may be referred to as an "inspection filter" and applied at different points in the fabrication process 10. The ability to automatically classify the defect type may make correcting the defect or cause of the defect more efficient and potentially automated. For example, "flat" defects (described below) and "lines" defects (also described below) are both common 3-D printing defects. However, each of these defects may be resolved using a different countermeasure. In any case, an aligner 12 may fail validation unless each inspection filter to which it is subjected generates a passing result.

Some validation inspection filters (e.g., the non-critical area and teeth below critical area filters) may be tied to a product performance specification. Other inspection filters may be configured to optimize the fabrication process. Process optimization inspection filters may be configured to tighten acceptance criteria by rejecting additional parts. For example, the total area validation inspection filter may analyze if the mold 26 is present in the carrier prior to scanning to confirm the mold 26 was loaded correctly on the scanner. Another purpose of this total area filter may be to differentiate between a broken mold (dropped or damaged) and a hole or undersized 3-D print. The total area inspection filter may pass the mold 26 if the total area of the source model matching the target model is greater than 10% of the total surface area. The nominal area inspection filter may analyze if a percentage of the overall surface area of the mold (i.e., the "nominal area") above the trimline is within a tighter deviation range (i.e., the "nominal deviation").

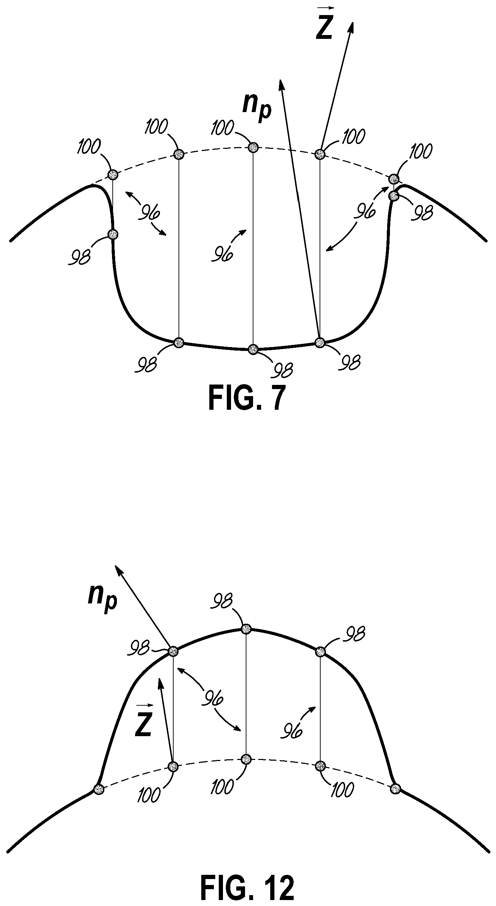

Fig. 7 depicts an exemplary region of a model having a concentrated negative deviation. The aforementioned holes inspection filter may be used to determine if such a concentrated region of the pre-use mold model has a negative deviation measurement *V* that exceeds a certain size acceptance criteria. A concentrated region may comprise a connected region with an area *A* that is less than a predetermined threshold, e.g., *A* ≤ 1.00 mm². A connected region may comprise a set of points 98, 100 where any two points within the region can be joined by a continuous path that lies entirely within the region. A concentrated region having a negative deviation may be a connected region in which all matched pairs comprising the region have a distance *Xᵢ* greater than the threshold *dₗᵢₘᵢₜ*. An exemplary hole defect volume *V* for a connected region is provided by Equation 1, and a corresponding size detection criteria is provided by Equation 2 below, $V = {\sum }_{p} - {d}_{p} {S}_{p} \left({\vec{n}}_{p}, \vec{Z}\right)$ Eqn. 1 $V > {d}_{H} {πR}_{H}^{2}$ Eqn. 2 where *p* represents points 98 in the concentrated region, *dₚ* is the deviation corresponding to the points 98, 100 of the matched pair 96 including the point 98, *Sₚ* returns the Voronoi area of the vertex (i.e., of point 98) in the source model corresponding to point *p*, *n̅ₚ* is the normal to the vertex in the source model, *̅Z̅*̅ is the normal to the vertex (i.e., point 100) of the target model corresponding to point *p*, *d_{H}* is the hole depth, and *R_{H}* is the hole radius.

The Voronoi area may be the area of a Voronoi cell of the vertex, which consists of all parts of a plane closer to that vertex than to any other vertex in the model. The normal to a point may be the vertex normal of the vertex of the mesh model corresponding to that point, which is equal to the average of the face normals of all the tiles that share that vertex. The face normal of a tile may be determined by computing the cross product of two edges of the tile, e.g., the two edges intersecting the vertex in question. The hole depth *d_{H}* may be equal to a mean distance *dₚ* between the points 98, 100 of the matched pairs 96 in the concentrated region. The hole radius *R_{H}* may be a mean distance from a geometric center of the concentrated region to an outer edge of the concentrated region in the target model. Accordingly, the right side of Equation 2 may be referred to as a "geometric volume" of the connected region. In certain embodiments of the invention, *d_{H}* and *Rₕ* may be threshold values that are not calculated for each detected region, but rather defined in the settings. In these embodiments, the geometric volume may have a constant value for holes and debris that is not specific to a region. That is, the geometric volume may have the same value for all regions. However, the geometric volume may still be different for different tooth types since different tooth types can have different threshold settings. In certain embodiments of the invention, only the Voronoi area is used for flats, in which case the geometric volume would not be used for flats.

Validation testing may be performed after calculating the deviations and tagging vertices that exceed the threshold. In an exemplary embodiment, validation may be based on a sum of the Voronoi areas of all vertexes with a deviation above the threshold value. Accordingly, the output of *V* of Equation 1 may be referred to as a "Voronoi volume" of the connected region. Separate sums may be calculated for each crown for tooth-wise validation. Specific defect detection (e.g., hole, flat, debris, etc.) may be performed in response to the area exceeding the critical threshold tolerance passing validation. For specific defect detection, first candidate points may be selected based on defect detection thresholds for the deviation. Negative deviations may be used for hole and flat defects, and positive deviations may be used for detecting debris. A separate list of point indexes may be stored for each defect type. The lists may be sorted in order of ascending absolute deviation values. An iteration may be performed over the lists starting from the highest deviation, and a graph algorithm of depth-first search with a terminator function may be used to find connected mesh areas and collect points for the next calculation. The terminator function may be different for different types of defects. By way of example, the terminator function for a flat defect may test the z-coordinate of the normal vector, together with a threshold test of difference in z-coordinates with the starting point of the search. Defects may only be detected if they are bigger than a threshold volume or threshold surface.

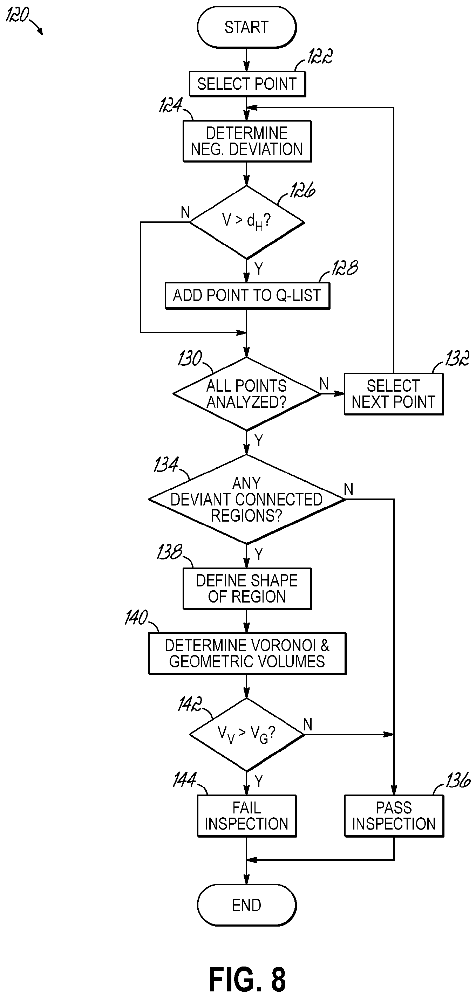

Fig. 8 depicts a flow chart illustrating a hole detection process 120 that compares the geometry of a set of points defining a concentrated region having negative deviation measurements with the size acceptance criteria. In block 122, the process 120 may select a point *pₓ* in the source model, proceed to block 124, and analyze the mesh vertex associated with the selected point *pₓ* to determine the negative deviation *V* thereof. In block 126, the process 120 may compare the negative deviation *V* to the hole depth *d_{H}*. If the negative deviation *V* is larger than the hole depth *d_{H}* ("YES" branch of decision block 126), the process 120 may proceed to block 128 and add the point to a list of questionable points, or "q-list", before continuing to block 130. If the negative deviation *V* is not larger than the hole depth *d_{H}* ("NO" branch of decision block 126), the process 120 may proceed to directly to block 130 and determine if all the points in the source model have been analyzed. In either case, if all the points have not been analyzed ("NO" branch of decision block 130), the process 120 may proceed to block 132, select the next point in the source model, and return to block 124. If all the points have been analyzed ("YES" branch of decision block 130), the process 120 may proceed to block 134.

In block 134, the process 120 may determine if any sets of points in the q-list define a connected region of points having negative deviations greater than the critical deviation, i.e., where *Dᵢ* < *D_{crit}*. If the process 120 does not identify any such deviant connected regions ("NO" branch of decision block 134), the process 120 may proceed to block 136, generate an indication the quality inspection has been passed, and terminate. If the process 120 identifies one or more deviant connected regions ("YES" branch of decision block 134), the process 120 may proceed to block 138.

In block 138, the process 120 may define a geometric shape for each deviant connected region. The process 120 may then proceed to block 140 and determine a Voronoi volume *V_{V}* and geometric volume *V_{G}* for each deviant connected region. The Voronoi volume *V_{V}* may be generated based on the points in the region, e.g., based on Equation 1. The geometric volume *V_{G}* may be generated based on the hole depth *d_{H}* and hole radius *R_{H}* of the geometric shape determined for that region, e.g., based on Equation 2.

The process 120 may then proceed to block 142 and determine, for each deviant connected region, if the Voronoi volume *V_{V}* is larger than the geometric volume *V_{G}* of the region. If the Voronoi volume *V_{V}* is larger than the geometric volume *V_{G}* ("YES" branch of decision block 142), the process 120 may proceed to block 144, generate an indication the quality inspection has been failed, and terminate. If the Voronoi volume *V_{V}* is not larger than the geometric volume *V_{G}* ("NO" branch of decision block 142), the process 120 may proceed to block 136, generate an indication the quality inspection has been passed, and terminate.

Table I shows exemplary aligner quality inspection acceptance criteria and values for various aligner defects. The term "negative reform" refers to holes in the mold 26, which can create bumps on the aligner 12 that protrude into the teeth when the material flows into the hole during thermoforming. The term "positive reform" refers to protrusions on the mold 26, which can create protrusions or bumps on the aligner that extend away from the teeth when the material is displaced by the protrusion during thermoforming. All dimensions in Table I are measures of the length/size of the defect on the aligner. Zones one through three refer to different portions of the patient's dentition. By way of example, Zone one may refer to the facial side of the patient's teeth extending from canine to canine, zone two may refer to the buccal and lingual sides of the teeth, and zone three may refer to the occlusal portions of the patient's teeth. As can be seen, different zones may have different acceptance criteria values.

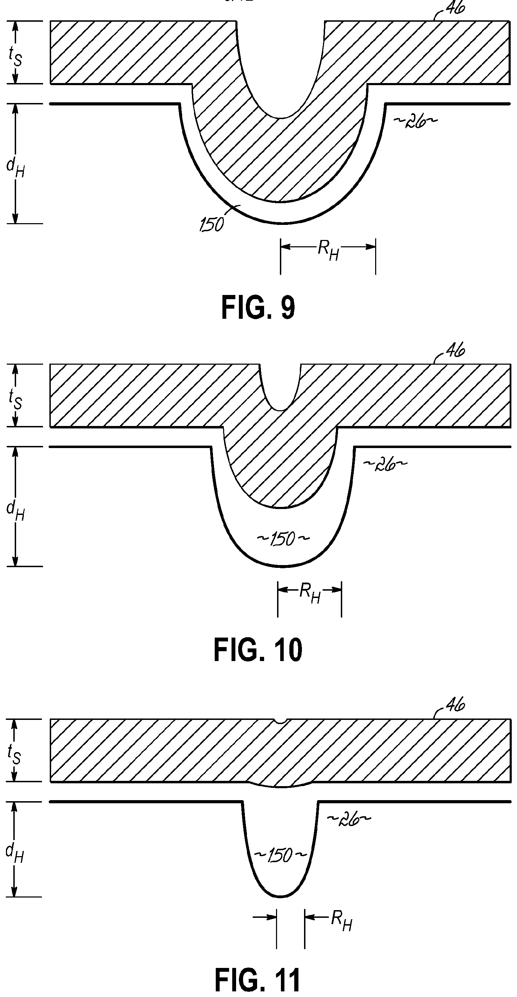

Figs. 9-11 depict the relationship between hole radius *R_{H}* for holes 150 in the mold 26 and the thickness *tₛ* of the sheet 46 used in the thermoforming process 44. If the diameter *D_{H}* of the hole 150 (where *D_{H}* = 2 × *R_{H}*) is less than twice the sheet thickness *tₛ* (i.e., *D_{H}* < 2 × *tₛ*), then the sheet 46 may fail to flow into the hole 150. Stated another way, holes 150 having a hole radius *R_{H}* less than the sheet thickness *tₛ* (i.e., *tₛ* > *R_{H}*) may fail to generate a major defect in the aligner 12. This indicates a suitable parameter setting for the hole quality inspection filter would be one that ignores holes with a hole radius *R_{H}* less than the sheet thickness *tₛ*, i.e., *R_{H}* < *tₛ*. By way of example, for a sheet thickness *tₛ* = 250 µm, the hole quality inspection filter could be set to *R_{H}* = 250 µm.

| Table I - Aligner Exemplary Quality Acceptance Criteria | | | |
|---|---|---|---|
| Defect Type | Zone One | Zone Two | Zone Three |
| Visible Bubbles | Acceptable if < 2 mm max 3 per tooth | Acceptable | Acceptable |
| Foreign Material | Unacceptable | Unacceptable | Unacceptable |
| Negative Reform | Unacceptable | Unacceptable | Unacceptable |
| Positive Reform on Aligner | Acceptable if < 3 mm max 3 per tooth | Acceptable | Acceptable if < 3 mm max 3 per tooth |
| Positive Reform on Attachment | Acceptable if < ½ attachment area | Acceptable if < ½ attachment area | Acceptable if < ½ attachment area |
| Hair Line/String Shaped Impression | Acceptable if < 3 mm | Acceptable | Acceptable |
| Cracks | Acceptable if does not intersect trimline | Acceptable if does not intersect trimline | Acceptable if does not intersect trimline |
| Over Scalloping | Acceptable | Acceptable | N/A |

Shallow holes 150 having a large diameter *D_{H}* may generate a negative reform as described in Table I. However, the hole depth *d_{H}* must be large enough to generate a noticeable reform, e.g., *d_{H}* > 175 µm. In an embodiment, the minimum hole depth *d_{H}* may be set to a value larger than the critical deviation *D_{crit}*, e.g., *d_{H_min}* = 400 µm. In an exemplary mold fabrication process, molds 26 may be printed in layers having a thickness that does not exceed 150 µm. The surface of the pre-use mold model 30 may need to be within ± 250 µm of the dentition model 14, and the thickness *tₛ* of the thermoformed sheet 46 may need to be at least 200 µm, with a typical range being 300 µm ≥ *tₛ* ≥ 200 µm.

The flats test may analyze the pre-use mold model 30 to determine if there are any areas that are "flat". Flat areas may be a common fabrication error for some 3-D printers. A region of the pre-use mold model 30 may be considered as a flat if it is within ± 125 µm of a plane over an area of at least 1.0 mm².

Fig. 12 depicts an exemplary region of a model having a concentrated positive deviation. A debris inspection filter may be used to determine if such a concentrated region of a model has a positive deviation measurement *V* that exceeds a certain size acceptance criteria. An exemplary positive deviation *V* is provided by Equation 3, and corresponding size acceptance criteria is provided by Equation 4, below $V = {\sum }_{p} {d}_{p} {S}_{p} \left({\vec{n}}_{p}, \vec{Z}\right)$ Eqn. 3 $V > {d}_{D} {πR}_{D}^{2}$ Eqn. 4 where like terms are the same as for Equations 1 and 2, *d_{D}* is the debris height, and *R_{D}* is the debris radius. The debris filter may analyze the pre-use mold model 30 to determine if it has a concentrated region with positive deviation measurements that exceed a predetermined acceptance criteria. In an embodiment, the criteria for debris may be set to the values listed for visible bubbles in Table I, which could be created by debris that have been thermoformed over. Positive reforms may also be created by debris that have been thermoformed over. However, the visible bubbles criteria may be used due to its tighter acceptance range. Embodiments of the disclosed quality inspection processes may use multiple sub-inspections to detect debris, e.g., one inspection for zone one, and another for zone two. Which zones sub-inspections are run on may depend on where clusters of positive deviation measurements are found. The sub-inspection process may compare the geometry of the cluster of positive deviation measurements with the size acceptance criteria.

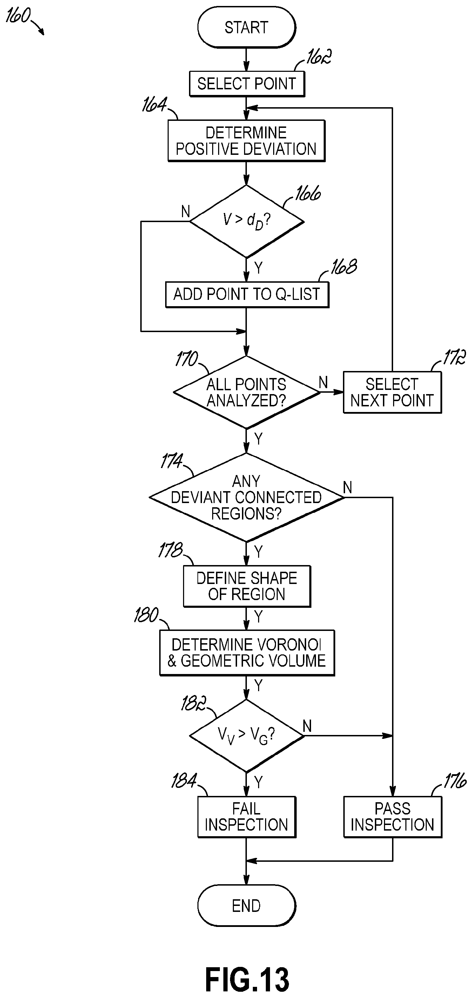

Fig. 13 depicts a flowchart illustrating an exemplary quality inspection process 160 for detecting positive deviations, e.g., debris. In block 162, the process 160 may select a point *pₓ* in the source model. The process 160 may then proceed to block 164 and analyze the mesh vertex associated with the selected point *pₓ* to determine a positive deviation *V* thereof. In block 166, the process 160 may compare the positive deviation *V* to a debris height *d_{D}*. If the positive deviation *V* is larger than the debris height *d_{D}* ("YES" branch of decision block 166), the process 120 may proceed to block 168 and add the point to a list of questionable points, or "q-list", before continuing to block 170. If the positive deviation *V* is not larger than the debris height *d_{D}* ("NO" branch of decision block 166), the process 160 may proceed to directly block 170 and determine if all the points in the source model have been analyzed. In either case, if all the points have not been analyzed ("NO" branch of decision block 170), the process 160 may proceed to block 172, select the next point in the source model, and return to block 164. If all the points have been analyzed ("YES" branch of decision block 170), the process 160 may proceed to block 174.

In block 174, the process 160 may determine if any sets of points in the q-list define a connected region of points having positive deviations greater than the critical deviation, i.e., where *V* > *D_{crit}*. If the process 160 does not identify any deviant connected regions ("NO" branch of decision block 174), the process 160 may proceed to block 176, generate an indication the quality inspection has been passed, and terminate. If the process 160 identifies one or more deviant connected regions ("YES" branch of decision block 174), the process 160 may proceed to block 178.

In block 178, the process 160 may define a geometric shape for each deviant connected region, then proceed to block 180 and determine a Voronoi volume *V_{V}* and a geometric volume *V_{G}* for each deviant connected region. The Voronoi volume *V_{V}* may be generated based on the points in the region, e.g., based on Equation 3. The geometric volume *V_{G}* may be generated based on the debris height *d_{D}* and debris radius *R_{D}* of the geometric shape determined for that region, e.g., based on Equation 4.

The process 160 may then proceed to block 182 and determine, for each deviant connected region, if the Voronoi volume *V_{V}* is larger than the geometric volume *V_{G}* of the region. If the Voronoi volume *V_{V}* is larger than the geometric volume *V_{G}* ("YES" branch of decision block 182), the process 160 may proceed to block 184, generate an indication the quality inspection has been failed, and terminate. If the Voronoi volume *V_{V}* is not larger than the geometric volume *V_{G}* ("NO" branch of decision block 182), the process 160 may proceed to block 176, generate an indication the quality inspection has been passed, and terminate.

An exemplary debris quality inspection filter may be defined in terms of debris radius *R_{D}*, e.g., for an aligner made from sheets having a thickness of 250 µm and based on the quality acceptance criteria for visible bubbles in Table I. In zone one, the quality acceptance criteria may be defined based on a stack-up of debris radius and sheet thickness being less than or equal to the maximum bubble diameter *d_{bubble}* using the following equation: $2 \times {R}_{D} + 2 \times {t}_{s} < {d}_{bubble}$ Eqn. 5 Solving Equation 5 for *R_{D}* gives the following: ${R}_{D} < \left({d}_{bubble}-2\times {t}_{s}\right) / 2$ Eqn. 6 Inputting the above exemplary values into Equation 6 produces a debris radius
*R_{D}* < (2000 µm - 2×250 µm)/2 = 750 µm. Thus, in the above example, the debris radius *R_{D}* in zone one would have to be less than 750 µm to pass inspection. Using the maximum positive reform value from Table 1 (i.e., 3.00 mm) for zones 2 and 3, and solving for the debris radius using equation 6 gives a debris radius *R_{D}* = 1.25 mm. Accordingly, the debris radius *R_{D}* in zones two and three would have to be less than 1.25 mm to pass inspection.

A quality inspection process for "resin-in-valley" may be considered as a subset of the quality inspection process for detecting debris described above. That is, a defect identified as being due to debris may be subjected to a further quality inspection test to determine if the defect is due to excess 3D print resin that collected and cured in an occlusal valley. This resin-in-valley process may follow essentially the same steps as depicted by blocks 162 through block 178 of quality inspection process 160. Once the shape of a connected region has been defined, the geometric shape of the connected region may be compared to a geometric shape consistent with resin in a valley, i.e., a shape similar to an iceberg. This comparison may comprise determining the Z-normal vector *̅Z̅*̅ of each vertex in the connected region, and comparing the Z-normal vectors using one or more parameters (e.g., the value of the valley Z-normal vector itself), as well as the mean and standard deviation of all the Z-normal vectors in the region. These acceptance criteria may be selected based on the knowledge that Z-normal vectors of defects associated with excess resin in occluded valleys would be close to vertical.

A lines validation inspection filter may be used to analyze any concentrated horizontally shaped geometrical areas of a source model (e.g., the pre-use mold model 30) and indicate the presence of a defect if any of these areas are longer and wider than a certain size and with deviation measurements greater than a certain value. The validation inspection filters described above are generally unique to the pre-use mold. However, other validation filters may also be used that are unique to the aligner. For example, validation filters may check for cracks in the aligner, which is a defect unique to the aligner. Other exemplary validation filters may include filters for validating aligner thickness, bubbles within the aligner material, trimline location, and the presence of clinical features absent from the pre-use mold, such as cutouts.

Embodiments of the quality inspection system may generate a quality inspection report (e.g., a .json file) that documents the measurement results and PASS/FAIL decisions for each quality inspection process performed. The report may include the inspection settings and filter values used during that inspection to enable users to confirm how a mold or aligner was inspected at any point in time after the quality inspection process has been completed.

The human machine interface may provide an operator with an interactive report and opportunity to disposition the FAIL result in real-time. For example, an advantage of producing a FAIL result for "debris" at the pre-use mold location would be to allow the mold to be reworked (the debris to be removed) immediately, prior to thermoforming and before the defect becomes permanent. This feature would segregate the FAIL mold prior to thermoforming, and the HMI screen and report would be available to the operator or system. For example, the operator could be prompted that the mold had failed. To this end, the human machine interface may display the defect type ("debris"), and the heatmap may be visible on the screen to provide direction as to the exact location of the debris on the mold. This feature would make reworking as efficient as possible. Reworking could also be automated for certain types of defects. For embodiments in which a human operator performs this dispositioning, there may be a single human machine interface representing the results for multiple scanners across one or more manufacturing lines.

In response to a user opening a quality inspection report, the system may prompt the user to select a stage of fabrication. The system may then select appropriate source and target models, e.g., the pre-use mold model 30 and dentition model 14, respectively. The system may then register the models and display a heatmap showing the deviations between the models. This heatmap may be two dimensional or three dimensional. In the case of a three dimensional heat map, the display may be configured so that the heat map can be interactively re-oriented. One advantage of the heatmap is that it quickly visually directs an operator to the precise location of the defect. For example, with a debris defect, the operator does not have to search the entire mold for the debris, but is guided to the exact spot and can immediately remove the debris and allow the mold to continue processing without creating a permanent defect.

The results may then be written to the same directory as the scanned models and have the same base file name with a predetermined extension, e.g., a json extension. By way of example, the heatmap may use a rainbow colormap including intermediate colors such as yellow and cyan. Middle spectrum colors (e.g., green) may indicate areas where deviations are within a ± minimum visible deviation. Progressively larger deviations above the minimum positive visible deviation may be displayed as varying shades of light green, yellow, orange, and red. Progressively larger deviations below the minimum negative visible deviation may be displayed as varying shades of dark green, cyan, light blue, and blue.

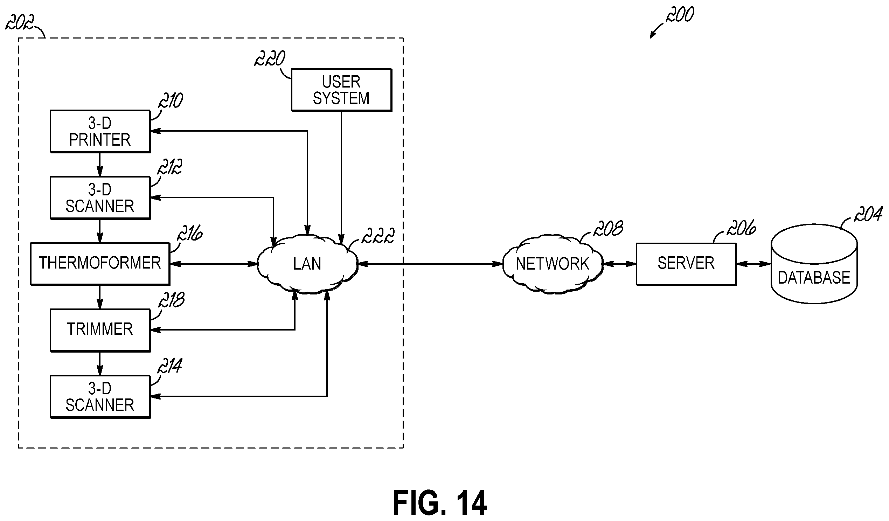

Fig. 14 depicts an exemplary operating environment 200 in accordance with an embodiment of a quality inspection system. The operating environment 200 includes a manufacturing line 202, a database 204, and a server 206 in communication with one or more systems in the manufacturing line 202 through a wide area network 208 (WAN), e.g., the Internet. The manufacturing line 202 may be one of a plurality of manufacturing lines 202 in one or more facilities that produce aligners 12 based on dentition models 14. The manufacturing line 202 may include one or more systems for performing the various fabrication and quality inspection processes described herein for manufacturing aligners 12. These systems may include, for example, a 3-D printer 210, one or more 3-D scanners 212, 214, a thermoforming machine 216, and a workpiece trimmer 218, as well as one or more robots, conveyor belts, etc. (not shown) that may be used to move or position products in the manufacturing line 202.

One or more of the aforementioned systems may communicate with a user system 220 over a local area network 222 (LAN). The user system 220 may be configured to enable a user to control one or more of the systems in the manufacturing line 202. The user system 220 may also enable the user to view and compare quality inspection data generated by one or more systems of the manufacturing line 202, as well as access quality inspection data stored in the database 204 . The local area network 222 may be connected to the wide area network 208 so that each of the machines connected to the local area network 222 can communicate with the server 206.

The database 204 may be used to collect and organize data generated and used by the various systems described above, and may include data and supporting data structures that store and organize the data. The database 204 may be arranged with any database organization or structure including, but not limited to, a relational database (e.g., a structured query language (SQL) database), a hierarchical database, a network database, or combinations thereof. In an embodiment of the disclosed system, the database 204 may be an SQL database that exists on a shared server, and there may be a server 206 and database 204 for each manufacturing site. The database itself 204 may be accessed using a server management client application running on the user system 220.

The server 206 may include a computer system or cloud-based service having at least one running instance of an application that provides functionality for other applications or "clients". The server 206 may host a database management system in the form of an application that accesses the information or data stored in records of the database 204 in response to a query. Client applications may be hosted, for example, by one or more of the systems of the manufacturing line 202, such as the user system 220. Exemplary services that may be provided by the server 206 include an application server, a file server, a web server, a database server (e.g., that manages database 204), or any other suitable server. Operational data collected from the systems of manufacturing line 202 may be uploaded to the server 206 and stored in the database 204 where the data can be accessed by other computer systems or the user system 220, e.g., using a web-browser or other client application.

The user system 220 may be configured to display business intelligence dashboards that provide interactive live analysis and insights of mold quality, aligner quality, and quality inspection results. Users may be provided with secure access to dashboards from any user system 220 having access to the wide area network 208, including mobile devices.

In an embodiment of the quality inspection system, data may be provided directly from the database 204 to the user system 220. The dashboards may include interactive controls that the user can manipulate to focus and filter results, such as "Start Date" and "End Date" controls that enable filtering of data for only a particular time frame. The database 204 may store quality inspection data from multiple manufacturing lines 202 and multiple manufacturing sites (e.g., servers 206) globally, and the user may filter results by selecting a data point in a chart or manufacturing line icon. Accordingly, one dashboard can include results from multiple manufacturing sites. In response to the user's selection, any graphs being displayed may automatically update to reflect only data for that manufacturing line 202. The user may further focus results, for example, to specific system (e.g., one of the scanners 212, 214) of the manufacturing line 202 by clicking on a data point for that system or a system identity icon.

Interactive filter choices may allow the user to view specific quality inspection statistics, such as mean deviation and standard deviation values for all results associated with passed inspections. Users may also monitor "leading indicators" such as mean deviation and standard deviation, and averages of those values in aggregate. These leading indicators may help determine the need for re-calibration, preventative maintenance, training or other intervention before the process begins to create defects. Thresholds can be determined that are specifically for manufacturing optimization. These thresholds may not produce individual FAIL results, but trigger action by a manufacturing team to adjust, correct or optimize fabrication equipment or processes. The thresholds for overall measurement trends may be tighter than the tolerances used in the validation filters.

Statistical data may refer to individual deviation measurements between each source model point and target model point. By way of example, each pre-use mold model 30 may include over 100,000 points. Quality targets may be provided to monitor trends for individual systems (e.g., scanners) and to assess the effects of changes to fabrication process steps (e.g., mold fabrication) to determining the need for re-calibration or preventative maintenance (e.g., scanner lens cleaning). In an embodiment of the disclosed system, calibration of processes may only use PASS results to avoid outliers that can skew the data for analysis which focuses on assessing and monitoring process accuracy.

Each 3-D scanner 212, 214 may include an application file having parameters that point to the database 204. Additional application settings may be maintained in tables in the database 204, and may be configured so that only authorized users approved for read/write access to the database 204 can modify the values. These may include settings for the quality inspection programs that perform the overlay and 3-D inspection measurements, and scanner settings such as lighting, elevation, merging, etc. The database 204 may also include one or more tables that store PASS/FAIL records, operator dispositioning, measurement results, and data analysis values. Each 3-D scanner 212, 214 may write to the database table after every mold inspection is complete, i.e., the table may be live.

The database 204 may include a quality inspection scanner table that contains coordinating information for any manufacturing line running a loading/unloading robot as part of a robotic quality inspection station. This table may include a "scanner" value that determines the priority of each scanner for loading, and an "is active" parameter that can be changed to "false" so that the robot knows to skip any scanner which is out of service or otherwise not in use. This feature may be useful for maintenance or troubleshooting, for example.

A "mold inspection result" table may be used to store the results of comparisons between the dentition model 14 and pre-use mold model 30. When a quality inspection of the mold 26 has been completed, and the validation phase has ended, the inspection application may transmit the quality inspection data to the database 204. This data may include information from a results file (e.g., mean deviation, PASS/FAIL, defect codes, etc.), as well as timestamps indicating when a scan started and ended, when merging started and ended, and when validation started and ended. For embodiments where the above information is sent as soon as the inspection completes, the database 204 may be considered as a live source of real-time information about quality inspection system performance and the quality of molds 26. Any dashboards that receive data from the database 204 may also be considered as "live" because the dashboard is receiving data in real time from the database 204.

A user may need to have read access to any database table for a manufacturing line 202 they are interested in viewing. When opening the database access application, the user may be prompted to choose which manufacturing line 202 or site they want to analyze. The application may be configured to only list information to which they have been granted read access.

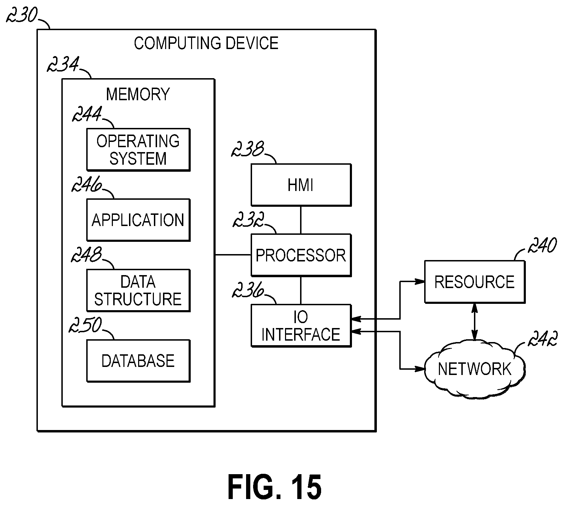

Referring now to Fig. 15, embodiments of the invention described above, or portions thereof, may be implemented using one or more computer devices or systems, such as exemplary computer 230. The computer 230 may include a processor 232, a memory 234, an input/output (I/O) interface 236, and a Human Machine Interface (HMI) 238. The computer 230 may also be operatively coupled to one or more external resources 240 via a network 242 or the I/O interface 236. External resources may include, but are not limited to, servers, databases, mass storage devices, peripheral devices, cloud-based network services, or any other resource that may be used by the computer 230.

The processor 232 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions stored in memory 234. Memory 234 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or data storage devices such as a hard drive, optical drive, tape drive, volatile or non-volatile solid state device, or any other device capable of storing data.

The processor 232 may operate under the control of an operating system 244 that resides in memory 234. The operating system 244 may manage computer resources so that computer program code embodied as one or more computer software applications, such as an application 246 residing in memory 234, may have instructions executed by the processor 232. In an alternative embodiment, the processor 232 may execute the application 246 directly, in which case the operating system 244 may be omitted. One or more data structures 248 may also reside in memory 234, and may be used by the processor 232, operating system 244, or application 246 to store or manipulate data.

The I/O interface 236 may provide a machine interface that operatively couples the processor 232 to other devices and systems, such as the external resource 240 or the network 242. The application 246 may thereby work cooperatively with the external resource 240 or network 242 by communicating via the I/O interface 236 to provide the various features, functions, applications, processes, or modules comprising embodiments of the invention. The application 246 may also have program code that is executed by one or more external resources 240, or otherwise rely on functions or signals provided by other system or network components external to the computer 230. Indeed, given the nearly endless hardware and software configurations possible, persons having ordinary skill in the art will understand that embodiments of the invention may include applications that are located externally to the computer 230, distributed among multiple computers or other external resources 240, or provided by computing resources (hardware and software) that are provided as a service over the network 242, such as a cloud computing service.

The HMI 238 may be operatively coupled to the processor 232 of computer 230 to allow a user to interact directly with the computer 230. The HMI 238 may include video or alphanumeric displays, a touch screen, a speaker, and any other suitable audio and visual indicators capable of providing data to the user. The HMI 238 may also include input devices and controls such as an alphanumeric keyboard, a pointing device, keypads, pushbuttons, control knobs, microphones, etc., capable of accepting commands or input from the user and transmitting the entered input to the processor 232. The HMI 238 may display results for any number of scanners across a single manufacturing line or multiple manufacturing lines.

A database 250 may reside in memory 234, and may be used to collect and organize data used by the various systems and modules described herein. The database 250 may include data and supporting data structures that store and organize the data. In particular, the database 250 may be arranged with any database organization or structure including, but not limited to, a relational database, a hierarchical database, a network database, or combinations thereof. A database management system in the form of a computer software application executing as instructions on the processor 232 may be used to access the information or data stored in records of the database 250 in response to a query, which may be dynamically determined and executed by the operating system 244, other applications 246, or one or more modules.

In general, the routines executed to implement the embodiments of the invention, whether implemented as part of an operating system or a specific application, component, program, object, module or sequence of instructions, or a subset thereof, may be referred to herein as "program code." Program code typically comprises computer-readable instructions that are resident at various times in various memory and storage devices in a computer and that, when read and executed by one or more processors in a computer, cause that computer to perform the operations necessary to execute operations or elements embodying the various embodiments of the aspects of the invention. Computer-readable program instructions for carrying out operations of the embodiments of the invention may be, for example, assembly language, source code, or object code written in any combination of one or more programming languages.

Various program code described herein may be identified based upon the application within which it is implemented in specific embodiments of the invention. However, it should be appreciated that any particular program nomenclature which follows is used merely for convenience, and thus the invention should not be limited to use solely in any specific application identified or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a computer program product in a variety of different forms. In particular, the program code may be distributed using a computer-readable storage medium having computer-readable program instructions thereon for causing a processor to carry out embodiments of the aspects of the invention.

Computer-readable storage media, which is inherently non-transitory, may include volatile and non-volatile, and removable and non-removable tangible media implemented in any method or technology for storage of data, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store data and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatuses, or other devices to function in a particular manner, such that the instructions stored in the computer-readable medium produce an article of manufacture including instructions that implement the functions, acts, or operations specified in the text of the specification, the flowcharts, sequence diagrams, or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, or operations specified in the text of the specification, flowcharts, sequence diagrams, or block diagrams.

The flowcharts and block diagrams depicted in the figures illustrate the architecture, functionality, or operation of possible implementations of systems, methods, or computer program products according to various embodiments of the invention. In this regard, each block in the flowchart or block diagrams may represent a module, segment, or portion of instructions, which comprises one or more executable instructions for implementing the specified logical function or functions.

In certain alternative embodiments, the functions, acts, or operations specified in the text of the specification, the flowcharts, sequence diagrams, or block diagrams may be reordered, processed serially, or processed concurrently consistent with embodiments of the invention. Moreover, any of the flowcharts, sequence diagrams, or block diagrams may include more or fewer blocks than those illustrated consistent with embodiments of the invention. It should also be understood that each block of the block diagrams or flowcharts, or any combination of blocks in the block diagrams or flowcharts, may be implemented by a special purpose hardware-based system configured to perform the specified functions or acts, or carried out by a combination of special purpose hardware and computer instructions.

The terminology used herein is for the purpose of describing particular embodiments only and is not intended to be limiting of the embodiments of the invention. As used herein, the singular forms "a", "an" and "the" are intended to include both the singular and plural forms, and the terms "and" and "or" are each intended to include both alternative and conjunctive combinations, unless the context clearly indicates otherwise. It will be further understood that the terms "comprises" or "comprising," when used in this specification, specify the presence of stated features, integers, actions, steps, operations, elements, or components, but do not preclude the presence or addition of one or more other features, integers, actions, steps, operations, elements, components, or groups thereof. Furthermore, to the extent that the terms "includes", "having", "has", "with", "comprised of", or variants thereof are used in either the detailed description or the claims, such terms are intended to be inclusive in a manner similar to the term "comprising".

While all the invention has been illustrated by a description of various embodiments, and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

## Claims

1. A method of fabricating an orthodontic aligner, comprising
receiving a dentition model representing a dentition of a patient at a stage of orthodontic treatment;
fabricating a mold based on the dentition model using a mold fabrication process;
scanning the mold to generate a pre-use mold model representing an outer surface of the mold;
comparing the pre-use mold model and the dentition model;
identifying one or more differences between the pre-use mold model and the dentition model based on the comparison;
failing the mold if at least one of the one or more differences exceeds a first threshold; and
passing the mold if none of the one or more differences exceeds the first threshold.

2. The method of claim 1, wherein the mold is a first mold, and further comprising:
adjusting the mold fabrication process for a second mold made after the first mold based on the one or more differences between the pre-use mold model and the dentition model.

3. The method of claim 2, wherein the first mold failed, and the second mold is fabricated based on the dentition model to replace the first mold.

4. The method of claim 2, wherein the dentition model is one dentition model of the patient at one stage of orthodontic treatment, the first mold passed, and the second mold is fabricated based on another dentition model of the patient at another stage of orthodontic treatment.

5. The method of claim 1, further comprising:
in response to passing the mold, thermoforming a sheet of thermoformable material over the mold to produce a workpiece having an inner surface formed at least in part by contact with the mold;
scanning at least a portion of the inner surface to generate an aligner model representing the portion of the inner surface of the workpiece;
comparing the pre-use mold model and the aligner model;
identifying one or more differences between the pre-use mold model and the aligner model based on the comparison between the pre-use mold model and the aligner model;
failing the workpiece if at least one of the one or more differences exceeds a second threshold; and
passing the workpiece if none of the one or more differences exceeds the second threshold.

6. The method of claim 5, wherein the dentition model includes a trimline, and further comprising:
using the trimline to define a tool path; and
guiding a cutting tool along the tool path to remove a region of the workpiece between an aligner and a waste portion of the workpiece such that the aligner is separated from the waste portion of the workpiece,
wherein scanning the at least the portion of the inner surface includes scanning the aligner after the aligner has been separated from the waste portion of the workpiece.

7. The method of claim 1, wherein the dentition model includes a trimline, and further comprising:
in response to passing the mold, thermoforming a sheet of thermoformable material over the mold to produce a workpiece having an inner surface formed at least in part by contact with the mold using a thermoforming process;
using the trimline to define a tool path;
guiding a cutting tool along the tool path to remove a region of the workpiece between an aligner and a waste portion of the workpiece such that the aligner is separated from the waste portion of the workpiece, the cutting tool cutting a channel in the mold as the cutting tool moves along the tool path;
scanning the mold including the channel to generate a post-use mold model including a representation of the channel;
comparing the post-use mold model and the dentition model;
identifying one or more differences between a position of the channel and the position of the trimline based on the comparison between the post-use mold model and the dentition model; and
modifying one or more parameters of at least one of the mold fabrication process or the thermoforming process based on the one or more differences between the position of the channel and the position of the trimline.

8. The method of claim 1, wherein the dentition model includes a trimline, and further comprising:
in response to passing the mold, thermoforming a sheet of thermoformable material over the mold to produce a workpiece having an inner surface formed at least in part by contact with the mold;
using the trimline to define a tool path;
adjusting the tool path based on the one or more differences between the pre-use mold model and the dentition model; and
guiding a cutting tool along the adjusted tool path to remove a region of the workpiece between an aligner and a waste portion of the workpiece such that the aligner is separated from the waste portion of the workpiece.

9. The method of claim 1, wherein the pre-use mold model includes a plurality of first points, and the dentition model includes a plurality of second points, and identifying the one or more differences between the pre-use mold model and the detention model includes:
registering the pre-use mold model and the dentition model;
creating a plurality of matched pairs each comprising a first point from the pre-use mold model and a second point from the dentition model closest to the first point from the pre-use mold model;
determining a distance between the first point and the second point of each matched pair;
classifying areas of the pre-use mold model where the distances are less than a threshold as within a specification; and
classifying areas of the pre-use mold model where the distances are greater than the threshold as not within the specification.

10. The method of claim 9, wherein classifying areas of the pre-use mold model includes:
adding each first point of each matched pair for which the distance is greater than the threshold to a list of questionable points;
determining if any sets of points on the list of questionable points define a connected region;
in response to determining no sets of points on the list of questionable points define a connected region, pass the mold;
in response to determining at least one set of points on the list of questionable points defines a respective connected region, for each connected region:
defining a geometric shape of the connected region,
defining a geometric volume of the connected region based on the geometric shape, and
defining a Voronoi volume for the connected region based on the points in the connected region;
in response to the Voronoi volume being greater than the geometric volume for any connected region, failing the mold; and
in response to the Voronoi volume not being greater than the geometric volume for any connected region, passing the mold.

11. A system, comprising:
one or more processors; and
a memory coupled to the one or more processors and including program code that, when executed by the one or more processors, causes the system to:
receive a dentition model representing a dentition of a patient at a stage of orthodontic treatment;
scan a mold fabricated based on the dentition model to generate a pre-use mold model representing an outer surface of the mold;
compare the pre-use mold model and the dentition model;
identify one or more differences between the pre-use mold model and the dentition model based on the comparison;
fail the mold if at least one of the one or more differences exceeds a first threshold; and
pass the mold if none of the one or more differences exceeds the first threshold.

12. The system of claim 11, wherein the mold is a first mold, and the program code further causes the system to:
adjust a fabrication process for a second mold made after the first mold based on the one or more differences between the pre-use mold model and the dentition model.

13. The system of claim 12, wherein the first mold failed, and the second mold is fabricated based on the dentition model to replace the first mold.

14. The system of claim 12, wherein the dentition model is one dentition model of the patient at one stage of orthodontic treatment, the first mold passed, and the second mold is fabricated based on another dentition model of the patient at another stage of orthodontic treatment.

15. The system of claim 11, wherein a sheet of thermoformable material is thermoformed over the mold to produce a workpiece having an inner surface formed at least in part by contact with the mold in response to passing the mold, and the program code further causes the system to:
scan at least a portion of the inner surface to generate an aligner model representing the portion of the inner surface of the workpiece;
compare the pre-use mold model and the aligner model;
identify one or more differences between the pre-use mold model and the aligner model based on the comparison between the pre-use mold model and the aligner model;
fail the workpiece if at least one of the one or more differences exceeds a second threshold; and
pass the workpiece if none of the one or more differences exceeds the second threshold.

16. The system of claim 15, wherein the dentition model includes a trimline, and the program code further causes the system to:
use the trimline to define a tool path configured to guide a cutting tool to remove a region of the workpiece between an aligner and a waste portion of the workpiece such that the aligner is separated from the waste portion of the workpiece,
wherein scanning the at least the portion of the inner surface includes scanning the aligner after the aligner has been separated from the waste portion of the workpiece.

17. The system of claim 11, wherein the dentition model includes a trimline, and the program code further causes the system to:
use the trimline to define a tool path configured to guide a cutting tool to remove a region of a workpiece between an aligner and a waste portion of the workpiece such that the aligner is separated from the waste portion of the workpiece and the cutting tool cuts a channel in the mold as the cutting tool moves along the tool path;
scan the mold including the channel to generate a post-use mold model including a representation of the channel;
compare the post-use mold model and the dentition model;
identify one or more differences between a position of the channel and the position of the trimline based on the comparison between the post-use mold model and the dentition model; and
modify one or more parameters of at least one of a mold fabrication process or a thermoforming process based on the one or more differences between the position of the channel and the position of the trimline.

18. The system of claim 11, wherein the dentition model includes a trimline, and the program code further causes the system to:
use the trimline to define a tool path; and
adjust the tool path based on the one or more differences between the pre-use mold model and the dentition model,
wherein a cutting tool is guided along the adjusted tool path to remove a region of a workpiece between an aligner and a waste portion of the workpiece such that the aligner is separated from the waste portion of the workpiece.

19. The system of claim 11, wherein the pre-use mold model includes a plurality of first points, the dentition model includes a plurality of second points, and the program code causes the system to identify the one or more differences between the pre-use mold model and the detention model by:
registering the pre-use mold model and the dentition model;
creating a plurality of matched pairs each comprising a first point from the pre-use mold model and a second point from the dentition model closest to the first point from the pre-use mold model;
determining a distance between the first point and the second point of each matched pair;
classifying areas of the pre-use mold model where the distances are less than a threshold as within a specification; and
classifying areas of the pre-use mold model where the distances are greater than the threshold as not within the specification.

20. The system of claim 19, wherein the program code causes the system to classify areas of the pre-use mold model by:
adding each first point of each matched pair for which the distance is greater than the threshold to a list of questionable points;
determining if any sets of points on the list of questionable points define a connected region;
in response to determining no sets of points on the list of questionable points define a connected region, pass the mold;
in response to determining at least one set of points on the list of questionable points defines a respective connected region, for each connected region:
defining a geometric shape of the connected region,
defining a geometric volume of the connected region based on the geometric shape, and
defining a Voronoi volume for the connected region based on the points in the connected region;
in response to the Voronoi volume being greater than the geometric volume for any connected region, failing the mold; and
in response to the Voronoi volume not being greater than the geometric volume for any connected region, passing the mold.

21. A computer program product comprising:
a non-transitory computer-readable storage medium; and
program code stored on the non-transitory computer-readable storage medium that, when executed by one or more processors, causes the one or more processors to:
receive a dentition model representing a dentition of a patient at a stage of orthodontic treatment;
scan a mold fabricated based on the dentition model to generate a pre-use mold model representing an outer surface of the mold;
compare the pre-use mold model and the dentition model;
identify one or more differences between the pre-use mold model and the dentition model based on the comparison;
fail the mold if at least one of the one or more differences exceeds a first threshold; and
pass the mold if none of the one or more differences exceeds the first threshold.

22. A method of fabricating an orthodontic aligner, comprising
fabricating a mold based on a dentition model representing a dentition of a patient at a stage of orthodontic treatment using a mold fabrication process;
scanning the mold to generate a pre-use mold model representing an outer surface of the mold;
thermoforming a sheet of thermoformable material over the mold using a thermoforming process to produce a workpiece having an inner surface formed at least in part by contact with the mold;
scanning at least a portion of the inner surface to generate an aligner model representing the portion of the inner surface of the workpiece;
comparing the pre-use mold model and the aligner model;
identifying one or more differences between the pre-use mold model and the aligner model based on the comparison between the pre-use mold model and the aligner model;
failing the workpiece if at least one of the one or more differences exceeds a threshold; and
passing the workpiece if none of the one or more differences exceeds the threshold.

23. The method of claim 22, wherein the dentition model includes a trimline, and further comprising:
modifying the trimline based on the one or more differences between the pre-use mold model and the aligner model to generate a modified trimline;
using the modified trimline to define a tool path; and
guiding a cutting tool along the tool path to remove a region of the workpiece between an aligner and a waste portion of the workpiece.

24. The method of claim 22, wherein the workpiece is a first workpiece, and further comprising:
adjusting the thermoforming process for a second workpiece made after the first workpiece based on the one or more differences between the pre-use mold model and the aligner model.

25. The method of claim 24, wherein the first workpiece failed, and the second workpiece is fabricated to replace the first workpiece.

26. The method of claim 24, wherein the dentition model is one dentition model of the patient at one stage of orthodontic treatment, the first workpiece passed, and the second workpiece is fabricated using another mold fabricated based on another dentition model of the patient at another stage of orthodontic treatment.

27. The method of claim 22, wherein the workpiece is scanned while on the mold to generate the aligner model, and further comprising:
overlaying the pre-use mold model onto the aligner model to identify a demarcation between the inner surface of the workpiece and the outer surface of the mold.

28. The method of claim 22, wherein the aligner model is a first aligner model, and further comprising:
scanning at least a portion of an outer surface of the workpiece to generate a second aligner model representing the portion of the outer surface of the workpiece;
comparing the first aligner model and the second aligner model to determine a thickness of the workpiece;
determining if the thickness of the workpiece meets an acceptance criteria;
failing the workpiece if the thickness of the workpiece does not meet the acceptance criteria; and
passing the workpiece if the thickness of the workpiece meets the acceptance criteria.

29. A system, comprising:
one or more processors; and
a memory coupled to the one or more processors and including program code that, when executed by the one or more processors, causes the system to:
scan a mold fabricated based on a dentition model representing a dentition of a patient at a stage of orthodontic treatment to generate a pre-use mold model representing an outer surface of the mold;
scan at least a portion of an inner surface of a workpiece fabricated from the mold using a thermoforming process to generate an aligner model representing the portion of the inner surface of the workpiece;
compare the pre-use mold model and the aligner model;
identify one or more differences between the pre-use mold model and the aligner model based on the comparison between the pre-use mold model and the aligner model;
fail the workpiece if at least one of the one or more differences exceeds a threshold; and
pass the workpiece if none of the one or more differences exceeds the threshold.

30. The system of claim 29, wherein the dentition model includes a trimline, and the program code further causes the system to:
modify the trimline based on the one or more differences between the pre-use mold model and the aligner model to generate a modified trimline;
use the modified trimline to define a tool path; and
guide a cutting tool along the tool path to remove a region of the workpiece between an aligner and a waste portion of the workpiece.

31. The system of claim 29, wherein the workpiece is a first workpiece, and the program code further causes the system to:
adjust the thermoforming process for a second workpiece made after the first workpiece based on the one or more differences between the pre-use mold model and the aligner model.

32. The system of claim 31, wherein the first workpiece failed, and the second workpiece is fabricated to replace the first workpiece.

33. The system of claim 31, wherein the dentition model is one dentition model of the patient at one stage of orthodontic treatment, the first workpiece passed, and the second workpiece is fabricated using another mold fabricated based on another dentition model of the patient at another stage of orthodontic treatment.

34. The system of claim 29, wherein the workpiece is scanned while on the mold to generate the aligner model, and the program code further causes the system to:
overlay the pre-use mold model onto the aligner model to identify a demarcation between the inner surface of the workpiece and the outer surface of the mold.

35. The system of claim 29, wherein the aligner model is a first aligner model, and the program code further causes the system to:
scan at least a portion of an outer surface of the workpiece to generate a second aligner model representing the portion of the outer surface of the workpiece;
compare the first aligner model and the second aligner model to determine a thickness of the workpiece;
determine if the thickness of the workpiece meets an acceptance criteria;
fail the workpiece if the thickness of the workpiece does not meet the acceptance criteria; and
pass the workpiece if the thickness of the workpiece meets the acceptance criteria.

36. A computer program product comprising:
a non-transitory computer-readable storage medium; and
program code stored on the non-transitory computer-readable storage medium that, when executed by one or more processors, causes the one or more processors to:
scan a mold fabricated based on a dentition model representing a dentition of a patient at a stage of orthodontic treatment to generate a pre-use mold model representing an outer surface of the mold;
scan at least a portion of an inner surface of a workpiece fabricated from the mold using a thermoforming process to generate an aligner model representing the portion of the inner surface of the workpiece;
compare the pre-use mold model and the aligner model;
identify one or more differences between the pre-use mold model and the aligner model based on the comparison between the pre-use mold model and the aligner model;
fail the workpiece if at least one of the one or more differences exceeds a threshold; and
pass the workpiece if none of the one or more differences exceeds the threshold.
